# EUROPEAN PATENT SPECIFICATION

(11) **EP 3 806 193 B1**
(45) Date of publication and mention of the grant of the patent: **18.05.2022**
(21) Application number: 18921881.1
(22) Date of filing: 05.06.2018
(51) Int. Cl.: H01M 50/209, H01M 50/503, H01M 50/516, H01M 50/528, H01M 50/552, H01M 50/553, H01M 50/557

(54) **CONNECTION MEMBER AND BATTERY PACK**
VERBINDUNGSELEMENT UND BATTERIEPACK
ÉLÉMENT DE CONNEXION ET BLOC-BATTERIE

(43) Date of publication of application: 14.04.2021
(73) Proprietor: KABUSHIKI KAISHA TOSHIBA, Minato-ku Tokyo 105-0023 (JP)
(72) Inventor: OHNO, Motoharu, Kawasaki-shi, Kanagawa 212-0013 (JP)
(74) Representative: AWA Sweden AB
(86) International application number: PCT/JP2018/021604
(87) International publication number: WO 2019/234835

(56) References cited:
- EP-A1- 3 046 164
- WO-A1-2014/178114
- WO-A1-2016/157268
- WO-A1-2016/204147
- WO-A1-2017/130705
- WO-A1-2018/043230
- JP-A- 2014 022 098
- JP-A- 2017 126 532
- JP-A- 2017 168 340
- US-A1- 2014 017 538
- US-A1- 2018 108 949

## Description

### FIELD

Embodiments described herein relate generally to a battery pack including a connecting member that electrically connects two secondary batteries.

### BACKGROUND

In a common battery pack, a plurality of secondary batteries are stacked in a stacking direction, and two adjacently stacked secondary batteries are electrically connected by a connecting member, such as a bus bar. Each secondary battery provided in such a battery pack includes an electrode group including a positive electrode and a negative electrode, a container in which the electrode group is accommodated, and terminals attached to the outer surface of the container. In the battery pack, the terminals of the two adjacently stacked batteries are connected by the connecting member, such as a bus bar, thereby achieving electrical connection therebetween.

In the secondary battery used in the battery pack, the container may consist of two container members made of a metal such as stainless steel. In this secondary battery, one of the container members, which is the first container member, is formed in a tubular shape with a bottom surface provided with a bottom wall and side walls, and the bottom wall and the side walls define the accommodating space that accommodates the electrode group. The accommodating space has an opening on a side opposite to the bottom wall. In the first container member, a flange is formed on the side opposite to the side where the bottom wall is located. In this secondary battery, the second container member is arranged to face the flange, and closes the opening of the accommodating space. The flange and the second container member protrude outward from the opening edge with respect to the side wall. The flange and the second container member are hermetically welded together along the entire perimeter of the opening, in the outer side relative to the edge of the opening. The accommodating space is thus sealed off (hermetically enclosed) from the outside through the welding of the flange and the second container member.

There is a battery pack in which a plurality of the above-described secondary batteries, in which the flange and the second container member are welded, are stacked in such a manner that the thickness direction of each secondary battery coincides with the stacking direction. In such a battery pack, two adjacently stacked secondary batteries may be arranged in such a manner that the second container member of one of the batteries faces the bottom wall of the other battery. In the battery pack in which secondary batteries are stacked in this manner, it is required that a connecting member that connects adjacently stacked secondary batteries does not interfere (touch) with the protruding parts of the flange and the second container member, and that the terminals are securely connected by the connecting member.

### CITATION LIST

### PATENT LITERATURE

Patent Literature 1: International Publication No. 2016/204147
Patent Literature 2: United States patent Publication 2014/017538 A1
Patent Literature 3: United States patent Publication 2014/178114 A1
Patent Literature 4: European patent Publication 3 046 164 A1
Patent Literature 5: United States patent Publication 2018/108949 A1

### SUMMARY

### TECHNICAL PROBLEM

An objective to be achieved by the present invention is to provide a connecting member that electrically connects two secondary batteries, securely connects the terminals of the batteries, and does not interfere with parts other than the terminals; and to provide a battery pack that includes this connecting member.

### SOLUTION TO PROBLEM

The invention is defined by the appended independent claim.

According to one embodiment, a connecting member electrically connects a first secondary battery and a second secondary battery which are adjacently stacked in a stacking direction. Each of the first secondary battery and the second secondary battery includes a first container member and a second container member both made of a metal, an electrode group including a positive electrode and a negative electrode, and a pair of terminals. In each of the first secondary battery and the second secondary battery, the first container member includes a bottom wall; a pair of first side walls along a first intersecting direction that intersects with the stacking direction; and a pair of second side walls along a second intersecting direction that intersects with both the stacking direction and the first intersecting direction; and the bottom wall, the first side wall and the second side walls define an accommodating space configured to accommodate the electrode group. The first container member includes a flange protruding outward relative to the first side walls and the second side walls, the flange being provided on a side opposite to a side where the bottom wall is located in the first container member. The second container member faces the flange, with covering an opening of the accommodating space. Each of the terminals is attached to an outer surface of the first containing member, and provided in a range within which a corresponding one of the first walls extends in a circumferential direction of the opening. The first secondary battery and the second secondary battery are arranged in a state in which the second container member of the first secondary battery faces the bottom wall of the second secondary battery. A first connector part of the connecting member has surface contact with an object terminal, which is one of the terminals of the first secondary battery, from an outer side in the second intersecting direction. A second connector part of the connecting member has surface contact with an object terminal, which is one of the terminals of the second secondary battery, from the outer side in the second intersecting direction, the object terminal being located on a same side as the object terminal of the first secondary battery with respect to an accommodating space of the first secondary battery and that of the second secondary battery in the second intersecting direction. Each of the first connector part and the second connector part extends along the first intersecting direction. A first bridge part of the connecting member is provided away from the object terminals of the first secondary battery and the second secondary battery in the first intersecting direction, and bridges the first connector part and the second connector part through a region on the outer side with respect to the flange of the first secondary battery in the second intersecting direction. In the connecting member, a first riser is provided between the first connector part and the first bridge part, and a second riser is provided between the second connector part and the first bridge part. The first riser locates the first bridge part further outward in the second intersecting direction than the first connector part, and the second riser locates the first bridge part further outward in the second intersecting direction than the second connector part.

### BRIEF DESCRIPTION OF THE DRAWINGS

FIG. 1 is a perspective view schematically showing an example of a battery pack according to a first embodiment.
FIG. 2 is a perspective view schematically showing a secondary battery according to the first embodiment.
FIG. 3 is a perspective view schematically showing a battery main body according to the first embodiment.
FIG. 4 is a perspective view schematically showing the battery main body according to the first embodiment in a state in which the battery main body is disassembled part by part.
FIG. 5 is a schematic view of the battery main body according to the first embodiment when viewed from a side where a bottom wall is located in a thickness direction.
FIG. 6 is a schematic diagram showing the secondary battery according to the first embodiment when viewed from one side of a lateral direction.
FIG. 7 is a schematic diagram showing a structure of an electrode group according to the first embodiment.
FIG. 8 is a perspective view schematically showing a terminal of the secondary battery according to the first embodiment.
FIG. 9 is a perspective view schematically showing the terminal of the secondary battery according to the first embodiment when viewed from a direction differing from that in FIG. 8.
FIG. 10 is a perspective view schematically showing a configuration of an electrical connection of adjacently stacked secondary batteries in the battery pack according to the first embodiment.
FIG. 11 is a perspective view schematically showing a bus bar of the battery pack according to the first embodiment.
FIG. 12 is a perspective view schematically showing a structure of an electrical connection of adjacently stacked secondary batteries in the battery pack according to a first modification.
FIG. 13 is a perspective view schematically showing a bus bar according to the first modification.
FIG. 14 is a perspective view schematically showing a structure of an electrical connection of adjacently stacked secondary batteries in a battery pack according to a second modification.

### DETAILED DESCRIPTION

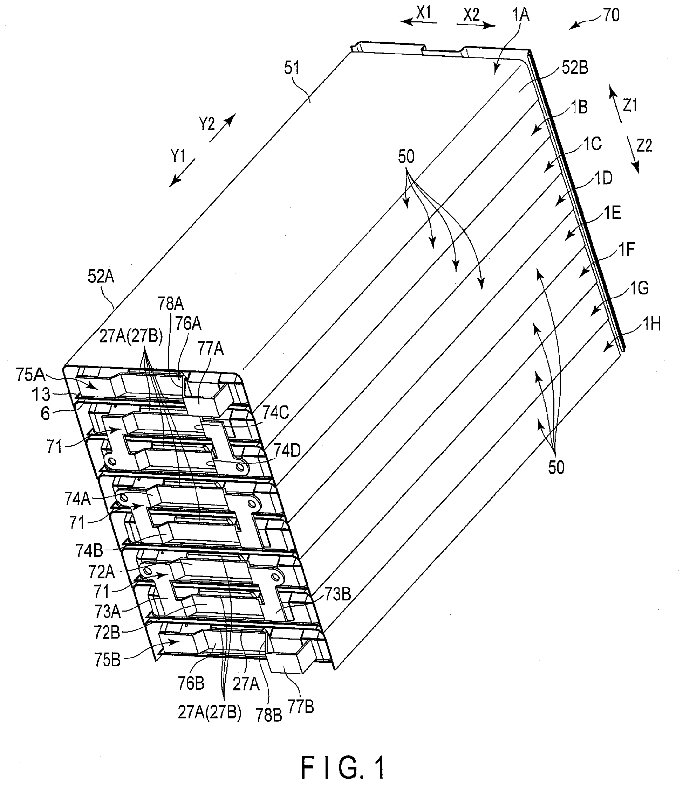

Hereinafter, the embodiments will be described with reference to FIGS. 1 to 14.

### (First Embodiment)

FIG. 1 shows an example of a battery pack 70 according to the first embodiment. The battery pack 70 includes a plurality of secondary batteries 1, for example eight secondary batteries 1A through 1H as shown in FIG. 1. In the battery pack 70, the secondary batteries 1A to 1H are stacked in a stacking direction (the direction indicated by arrows Z1 and Z2). The stacking direction of the secondary batteries 1A through 1H is a direction in which the secondary batteries 1A through 1H are arranged. Herein, in the battery pack 70, a first intersecting direction (the direction indicated by arrows X1 and X2) that intersects the stacking direction, and a second intersecting direction (the direction indicated by arrows Y1 and Y2) that intersects the stacking direction and the first intersecting direction, are defined. In the present embodiment, the first intersecting direction is perpendicular or substantially perpendicular to the stacking direction, and the second intersecting direction is perpendicular or substantially perpendicular to the stacking direction, and perpendicular or substantially perpendicular to the first intersecting direction.

### <Secondary Battery>

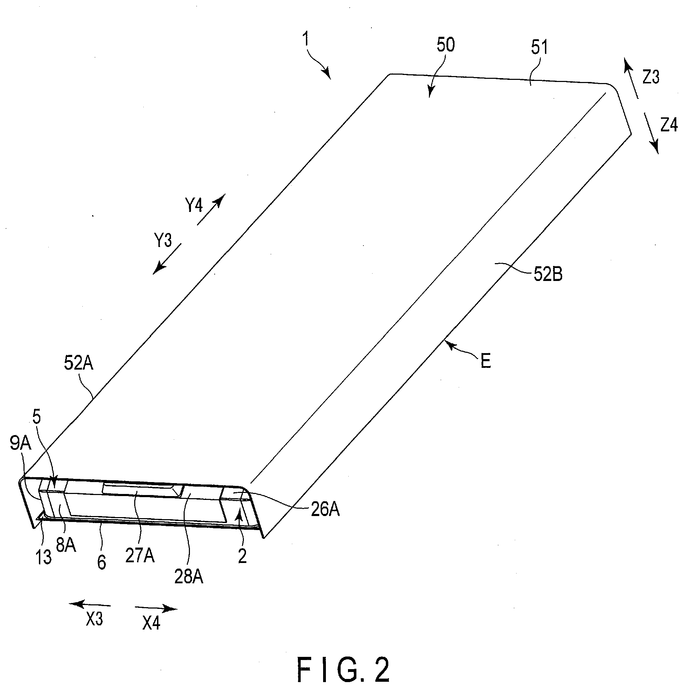

A single secondary battery 1 among those provided in the battery pack 70 will be described. Each of the secondary batteries 1A through 1H in the example of FIG. 1 has a similar configuration to that of the secondary battery 1, which will be described below. FIG. 2 shows the secondary battery 1 according to the present embodiment. The secondary battery 1 is, for example, a nonaqueous electrolyte battery. As shown in FIG. 2, the secondary battery 1 includes a battery main body 2 and an attachment member 50 attached to the battery main body 2.

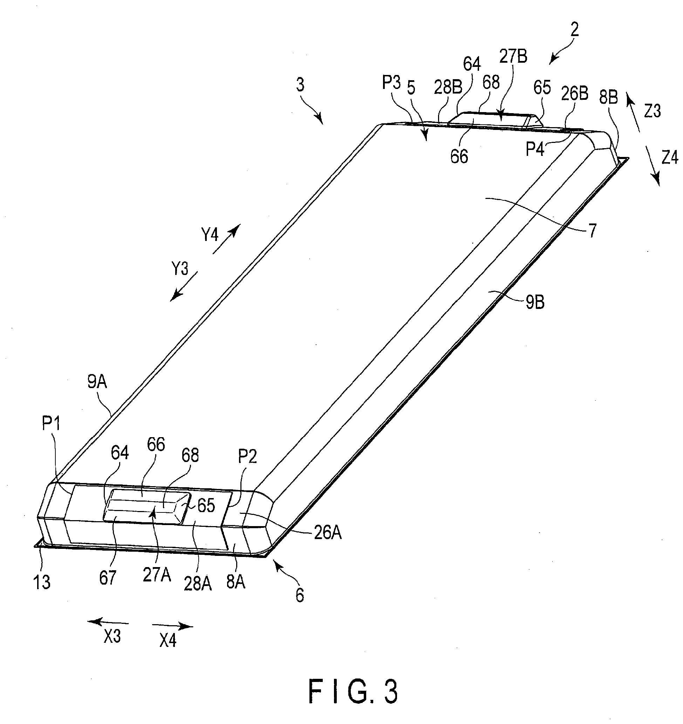

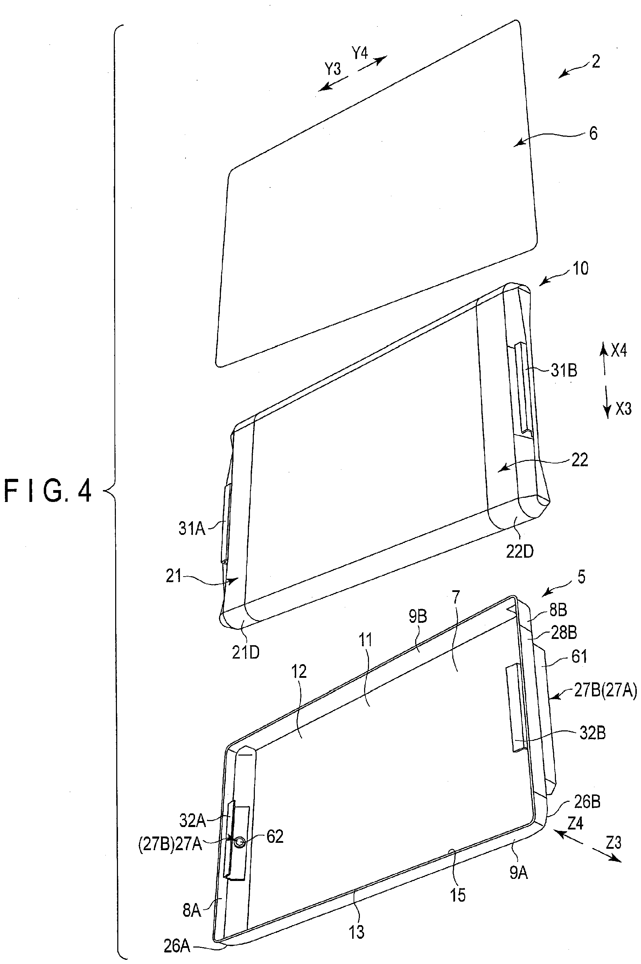

FIG. 3 shows the battery main body 2, and FIG. 4 shows the battery main body 2 disassembled part by part. As shown in FIGS. 2 to 4, the battery main body 2 includes a container 3. The container 3 is composed of a first container member 5 and a second container member 6. Each of the container members 5 and 6 is made of a metal such as stainless steel. Examples of the metal other than stainless steel forming the container members 5 and 6 include aluminum, an aluminum alloy, carbon steel, and plated steel. The first container member 5 is formed in a shape of a tube having a bottom. In the present embodiment, the first container member 5 has a bottom wall 7 and two pairs of side walls 8A, 8B and 9A, 9B, which make up a shape of an approximately rectangular tube having a bottom. In the first container member 5, the bottom wall 7 and the side walls 8A, 8B, 9A, and 9B define an accommodating space 11. The accommodating space 11 accommodates an electrode group 10.

The accommodating space 11 has an opening 12 on a side opposite to the bottom wall 7. Here, in the secondary battery 1, a depth direction (the direction indicated by arrows X3 and X4), a lateral direction (the direction indicated by arrows Y3 and Y4) perpendicular or substantially perpendicular to (intersecting with) the depth direction, and a thickness direction (the direction indicated by arrows Z3 and Z4) perpendicular or approximately perpendicular to (intersecting with) the depth direction and perpendicular or approximately perpendicular to (intersecting with) the lateral direction, are defined. In the secondary battery 1, the pair of the side walls (first side walls) 8A and 8B extends along the depth direction, and is continuous in the depth direction, from the side wall 9A to the side wall 9B. The pair of side walls (second side walls) 9A and 9B extends in the lateral direction, and is continuous in the lateral direction, from the side wall 8A to the side wall 8B. The side walls 8A and 8B face each other, and are arranged apart from each other in the lateral direction with the accommodating space 11 interposed therebetween. The side walls 9A and 9B face each other, and are arranged apart from each other in the depth direction with the accommodating space 11 interposed therebetween. In addition, each of the side walls 8A, 8B, 9A, and 9B extends from the bottom wall 7 toward the opening 12 in the thickness direction, and the accommodating space 11 opens toward one side (the arrow Z4 side) in the thickness direction in the opening 12. An opening surface of the opening 12 is parallel or substantially parallel to the depth direction and the lateral direction.

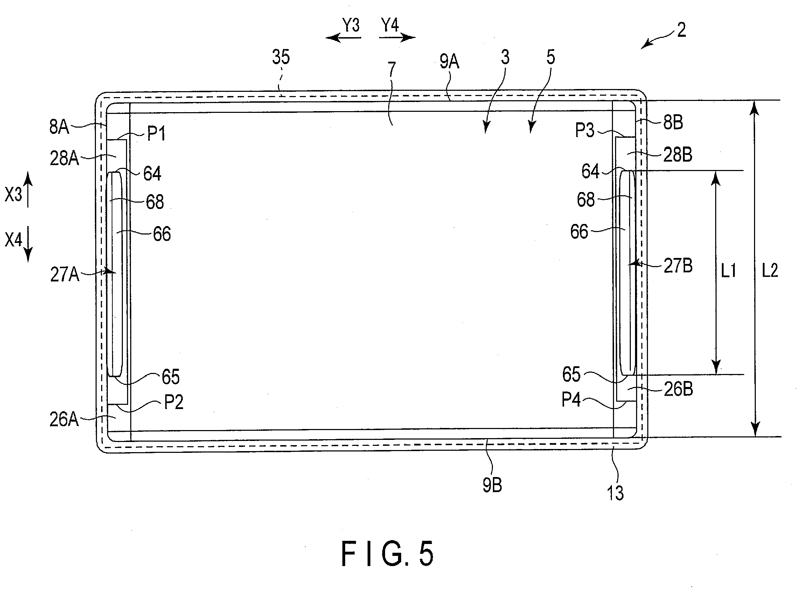

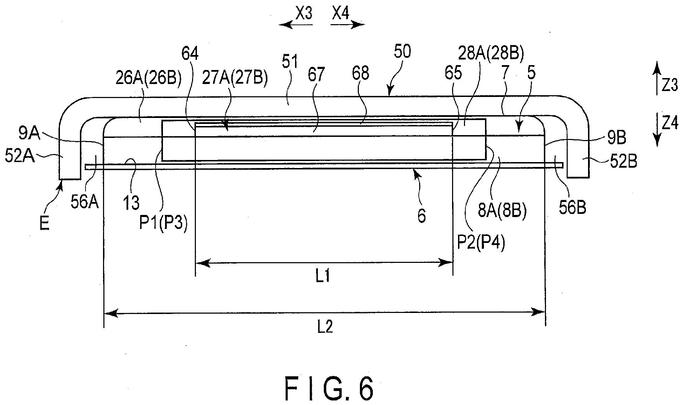

FIG. 5 shows the battery main body 2 viewed in the thickness direction of the secondary battery 1, from the side (the arrow Z3 side) where the bottom wall 7 is located. FIG. 6 shows the secondary battery 1 viewed from one side of the lateral direction (for example, the arrow Y3 side). As shown in FIGS. 2 to 6, a flange 13 is provided in the first container member 5 on the side opposite to the bottom wall 7. The flange 13 defines an opening edge 15 of the opening 12 around the entire perimeter in the circumferential direction of the opening 12. The flange 13 protrudes outward at the opening edge 15, around the entire perimeter in the circumferential direction of the opening 12. Therefore, the flange 13 protrudes from the side walls 8A, 8B, 9A, and 9B to a side away from the opening 12 in a direction parallel to an opening surface of the opening 12.

In the present embodiment, in a cross section perpendicular or substantially perpendicular to the thickness direction of the secondary battery 1, the area surrounded by the side walls 8A, 8B, 9A, and 9B has a rectangular or substantially rectangular shape, but the cross-sectional shape is not limited thereto. In an example, the area surrounded by the side walls in a cross section perpendicular or substantially perpendicular to the thickness direction of the secondary battery 1 may be formed in, for example, a polygonal shape other than a rectangular shape, or in an elliptical shape.

In the present embodiment, the second container member 6 is a plate-shaped member, and is formed in a substantially rectangular shape, for example. The second container member 6 is arranged to face the flange 13, and is attached to the flange 13 from a side where the opening 12 opens. In the present embodiment, the second container member 6 protrudes outward at the opening edge 15, around the entire perimeter of the circumferential direction of the opening 12. The second container member 6 thus protrudes from the side walls 8A, 8B, 9A, and 9B toward a side away from the opening 12, in a direction parallel to an opening surface of the opening 12. In the area outside the opening edge 15, the second container member 6 faces the flange 13 around the perimeter of the circumferential direction of the opening 12. The second container member 6 covers the opening 12 of the accommodating space 11. In the present embodiment, the thickness direction of the plate-like second container member 6 coincides or substantially coincides with the thickness direction of the secondary battery 1 (the battery main body 2).

The distance from the bottom wall 7 to the opening 12 is much smaller than that between the side walls 8A and 8B and, also, that between the side walls 9A and 9B. Then, in the secondary battery 1, the dimension in the thickness direction is much smaller than that in the depth direction and, also, that in the lateral direction. In the present embodiment, the distance between the side walls 8A and 8B is greater than that between the side walls 9A and 9B, and in the secondary battery 1, the dimension in the lateral direction is greater than that in the depth direction. Herein, the distance between the side walls (first side walls) 8A and 8B corresponds to the dimension of the accommodating space 11 (opening 12) in the lateral direction of the secondary battery 1. Furthermore, the distance between the side walls (second side walls) 9A and 9B corresponds to the dimension of the accommodating space 11 (opening 12) in the depth direction of the secondary battery 1. The distance from the bottom wall 7 to the opening 12 corresponds to the dimension of the accommodating space 11 in the thickness direction of the secondary battery 1.

In one example, in the first container member 5, a wall thickness of each of the bottom wall 7, the side walls 8A, 8B, 9A, and 9B, and the flange 13 is from 0.02 mm to 0.3 mm. Furthermore, the plate-like second container member 6 has a wall thickness from 0.02 mm to 0.3 mm. The dimension of the protrusion of each of the flange 13 and the second container member 6 from the opening edge 15 (the side walls 8A, 8B, 9A, and 9B) is in the order of 2 mm to 5 mm. In other words, the distance from the opening edge 15 of the opening 12 to the outer peripheral end (outer edge) of each of the flange 13 and the second container member 6 is in the order of 2 mm to 5 mm.

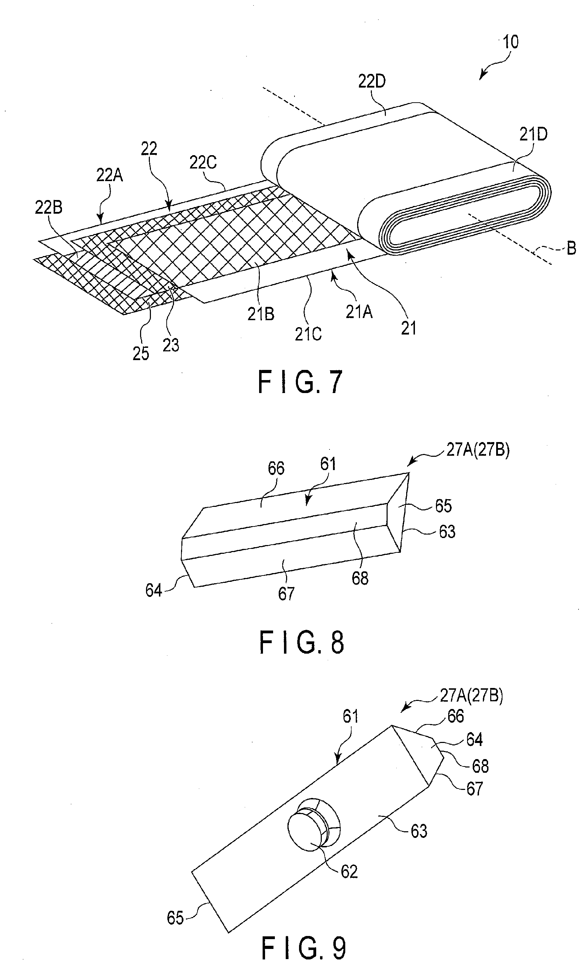

FIG. 7 is a diagram explaining the structure of the electrode group 10. As shown in FIG. 7, the electrode group 10 is formed into, for example, a flat shape, and includes a positive electrode 21, a negative electrode 22, and separators 23 and 25. The positive electrode 21 includes a positive electrode current collecting foil 21A as a positive electrode current collector, and a positive electrode active material-containing layer 21B supported on a surface of the positive electrode current collecting foil 21A. The positive electrode current collecting foil 21A is an aluminum foil or an aluminum alloy foil having a thickness of the order of 10 µm to 20 µm. On the positive electrode current collecting foil 21A, a slurry containing a positive electrode active material, a binder, and a conductive agent is applied. The positive electrode active material is, for example, but not limited to, an oxide, a sulfide, or a polymer that can occlude and release lithium. In order to provide high positive electrode potential, lithium manganese oxide compound, lithium nickel composite oxide, lithium cobalt complex oxide, or lithium iron phosphate is preferably used as the positive electrode active material.

The negative electrode 22 includes a negative electrode current collecting foil 22A as a negative electrode current collector, and a negative electrode active material-containing layer 22B supported on a surface of the negative electrode current collecting foil 22A. The negative electrode current collecting foil 22A is an aluminum foil, an aluminum alloy foil, or a copper foil, and the thickness thereof is in the order of 10 µm to 20 µm. On the negative electrode current collecting foil 22A, a slurry containing a negative electrode active material, a binder, and a conductive agent is applied. The negative electrode active material is, for example, but not limited thereto, a metal oxide, a metal sulfide, a metal nitride, or a carbon material that can occlude and release lithium ions. As the negative electrode active material, materials having a lithium ion absorbing and releasing potential nobler by 0.4 V or more than the metal lithium potential, namely materials having a lithium ion absorbing and releasing potential of 0.4 V (vs. Li+/Li) or more, are preferably used. Using negative electrode active materials having such a lithium ion absorbing and releasing potential suppresses a reaction between aluminum or an aluminum alloy and lithium, which makes it possible to use aluminum or an aluminum alloy for structural members related to the negative electrode current collecting foil 22A and the negative electrode 22. Examples of negative electrode active materials having a lithium ion absorbing and releasing potential of 0.4 V (vs. Li+/Li) or more include titanium oxides, lithium-titanium composite oxides such as lithium titanate, tungsten oxides, amorphous tin oxides, niobium titanium composite oxides, tin silicon oxides, and silicon oxides, and it is particularly preferable to use lithium-titanium composite oxide as a negative electrode active material. If a carbon material that absorbs and releases lithium ions is used as a negative electrode active material, a copper foil is preferable for use as a negative electrode current collecting foil 22A. A carbon material used as the negative electrode active material has a lithium ion absorbing and releasing potential of the order of 0 V (vs. Li+/Li).

It is preferable that the aluminum alloy used as the positive electrode current collecting foil 21A and the negative electrode current collecting foil 22A contains one or two or more elements selected from the group consisting of Mg, Ti, Zn, Mn, Fe, Cu, and Si. The purity of aluminum and the aluminum foil can be 98% by mass or more, preferably 99.99% by mass or more. Pure aluminum having purity of 100% can be used as a material of the positive electrode current collector and/or negative electrode current collector. The amount of transition metal, such as nickel or chromium, contained in the aluminum or aluminum alloy foil is preferably 100 weight ppm or less (including 0 weight ppm).

In the positive electrode current collecting foil 21A, the positive electrode current collecting tab 21D is formed by one long-side edge 21C and the vicinity thereof. In the present embodiment, the positive electrode current collecting tab 21D is formed along the entire length of the long-side edge 21C. In the positive electrode current collecting tab 21D, the positive electrode active material-containing layer 21B is not supported on the surface of the positive electrode current collecting foil 21A. In the negative electrode current collecting foil 22A, the negative electrode current collecting tab 22D is formed by one long-side edge 22C and the vicinity thereof. In the present embodiment, the negative electrode current collecting tab 22D is formed along the entire length of the long-side edge 22C. In the negative electrode current collecting tab 22D, the negative electrode active material-containing layer 22B is not supported on the surface of the negative electrode current collecting foil 22A.

Each of the separators 23 and 25 is made of a material having electrical insulation properties, and electrically insulates the positive electrode 21 from the negative electrode 22. Each of the separators 23 and 25 may be a sheet or the like separate from the positive electrode 21 and the negative electrode 22, or formed integrally with either one of the positive electrode 21 or the negative electrode 22. The separators 23 and 25 may be made of either an organic or inorganic material, or of a mixture of organic and inorganic materials. Examples of the organic materials to use for making the separators 23 and 25 are engineering plastics and super engineering plastics. Examples of such engineering plastics include polyamid, polyacethal, polybutylene terephthalate, polyethylene terephthalate, syndiotactic polystyrene, polycarbonate, polyamide-imide, polyvinyl alcohol, polyvinylidene fluoride, and modified polyphenyleneether. Examples of such engineering plastics include polyphenylene sulfide, polyetheretherketone, liquid crystal polymer, polyvinlidene fluoride, polytetrafluoroethylene (PTFE), polyethernitrile, polysulfone, polyacrylate, polyetherimide, and thermoplastic polyimide. Examples of the inorganic materials constituting the separators 23 and 25 include oxides (for example, aluminum oxides, silicon dioxides, magnesium oxides, phosphorous oxides, calcium oxides, iron oxides, titanium oxides) and nitrides (for example, boron nitrides, aluminum nitrides, silicon nitrides, barium nitrides).

In the electrode group 10, the positive electrode 21, the negative electrode 22, and the separators 23 and 25 are wound around a winding axis B, with the separators 23 and 25 sandwiched between the positive electrode active material-containing layer 21B and the negative electrode active material-containing layer 22B. In this case, for example, the positive electrode 21, the separator 23, the negative electrode 22, and the separator 25 are stacked in this order and wound. In the electrode group 10, the positive electrode current collecting tab 21D of the positive electrode current collecting foil 21A protrudes to one side of the direction along the winding axis B relative to the negative electrode 22 and the separators 23 and 25. The negative electrode current collecting tab 22D of the negative electrode current collecting foil 22A protrudes to a side opposite to the side to which the positive electrode current collecting tab 21D protrudes in the direction along the winding axis B relative to the positive electrode 21 and the separators 23 and 25. The electrode group 10 is arranged in such a manner that the winding axis B is parallel or substantially parallel to the lateral direction of the secondary battery 1.

In one example, in the accommodating space 11, the electrode group 10 is impregnated in an electrolytic solution (not shown). A liquid nonaqueous electrolytic solution is used as an electrolytic solution, which is prepared by, for example, the dissolving of an electrolyte in an organic solvent. In this case, examples of the electrolyte that dissolves into an organic solvent include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bis-trifluoromethylsulfonylimide [LiN(CF₃SO₂)₂], and mixtures thereof. Examples of the organic solvent include: cyclic carbonate, such as propylene carbonate (PC), ethylene carbonate (EC), or vinylene carbonate; chain carbonate, such as diethyl carbonate (DEC), dimethyl carbonate (DMC), or methyl ethyl carbonate (MEC); cyclic ether, such as tetrahydrofuran (THF), 2-methyltetrahydrofuran (2MeTHF), and dioxolane (DOX); cyclic ether, such as dimethoxyethane (DME), and diethoxyethane (DEE); γ-butyrolactone (GBL), acetonitryl (AN), and sulfolane (SL). These organic solvents may be used individually or combined.

In one example, a gel-type nonaqueous electrolyte in which a nonaqueous electrolytic solution and a high-polymer material are mixed as a composite is used as a nonaqueous electrolyte, instead of an electrolytic solution. In this case, the above-described electrolyte and the organic solvent are used. Examples of high polymer materials include polyvinylidene fluoride (PVdF), polyacrylonitrile (PAN), and polyethylene oxide (PEO).

In one example, a solid electrolyte, such as a high polymer solid electrolyte or an inorganic solid electrolyte, is used as a nonaqueous electrolyte, instead of the electrolytic solution. In this case, the separators 23 and 25 are not necessarily provided in the electrode group 10. Furthermore, in the electrode group 10, a solid electrolyte, instead of the separators 23 and 25, is sandwiched between the positive electrode 21 and the negative electrode 22. For this reason, in the present example, the solid electrolyte electrically insulates the positive electrode 21 and the negative electrode 22 from each other.

As shown in FIG. 5, etc., in the battery main body 2, a welding part 35 at which the flange 13 and the second container member 6 are hermetically welded is formed. The welding part 35 is provided outside of the opening edge 15 of the opening 12, in other words, on the side away from the opening 12 in a direction parallel to the opening surface of the opening 12. Thus, in the flange 13 and the second container member 6, the welding part 35 is provided at the part protruding outward from the side walls 8A, 8B, 9A, and 9B (opening edge 15). The welding part 35 extends along the opening edge 15, and is continuously formed around the perimeter in the circumferential direction of the opening 12. Thus, the flange 13 and the second container member 6 are hermetically welded along the perimeter of the circumferential direction of the opening 12. Since the flange 13 and the second container member 6 are hermetically welded at the welding part 35 as described above, the accommodating space 11 is thereby hermetically enclosed, and the accommodating space 11 is thus sealed.

In the welding part 35, the flange 13 and the second container member 6 are welded by, for example, resistance seam welding. Compared to laser welding, etc., the resistance seam welding can reduce cost and achieve a high degree of air-tightness between the flange 13 and the second container member 6. In FIG. 5, the welding part 35 is indicated by a broken line.

As shown in FIGS. 3 to 6, on the outer surface of the first container member 5, the tilted surface 26A is provided between the bottom wall 7 and the side wall 8A, and the tilted surface 26B is provided between the bottom wall 7 and the side wall 8B. Each of the tilted surfaces 26A and 26B extends continuously in the depth direction from the side wall 9A to the side wall 9B. For this reason, each of the tilted surfaces 26A and 26B extends over the same or approximately the same range as that of a corresponding one of the side walls 8A and 8B in the circumferential direction of the opening 12. Each of the tilted surfaces 26A and 27B is tilted with respect to the bottom wall 7 and the side walls 8A and 8B. Each of the tilted surfaces 26A and 27B is inwardly tilted in the lateral direction as it nears the bottom wall 7. Thus, each of the tilted surfaces 26A and 26B creates an obtuse angle with the bottom wall 7 at the intersection therebetween, and creates an obtuse angle at the intersection with a corresponding one of the side walls 8A and 8B,.

On the outer surface of the first container member 5, a pair of the terminals 27A and 27B is attached. One of the terminals 27A and 27B is a positive electrode terminal of the secondary battery 1, while the other is a negative electrode terminal. In the present embodiment, the terminal 27A is attached to the tilted surface 26A, while being externally exposed, and the terminal 27B is attached to the tilted surface 26B, with being externally exposed. Thus, each of the terminals 27A and 27B is provided within the range in which a corresponding side wall among 8A and 8B extends according to the circumferential direction of the opening 12. In the example shown in FIG. 3, etc., the terminal 27A is arranged at or substantially at the center of the tilted surface 26A in the depth direction of the secondary battery 1, and the terminal 27B is arranged at or substantially at the center of the tilted surface 26B in the depth direction of the secondary battery 1. Each of the terminals 27A and 27B is made of an electrically conductive material, for example aluminum, copper, or stainless steel.

On the outer surface of the first container member 5, a pair of the insulating members 28A and 28B made of an electrically insulating material is provided. The insulating member 28A is arranged on the outer surface of the side wall 8A and the tilted surface 26A, and the insulating member 28B is arranged on the outer surface of the side wall 8B and the tilted surface 26B. The insulating member 28A is interposed between the tilted surface 26A and the terminal 27A, and electrically insulates the terminal 27A from the container 3 (the first container member 5). Similarly, the insulating member 28B is interposed between the tilted surface 26B and the terminal 27B, and electrically insulates the terminal 27B from the container 3 (the first container member 5). In the secondary battery 1, the terminal 27A is arranged at a location closer to the center of the tilted surface 26A than to (in other words, arranged inside of) the outer edges (PI, P2) of the insulating member 28A, according to the depth direction. The terminal 27B is arranged at a location closer to the center of the tilted surface 26B than to (in other words, arranged inside of) the outer edges (P3, P4) of the insulating member 28B, according to the depth direction.

The positive electrode current collecting tab 21D of the electrode group 10 is bundled through a welding process, such as ultrasonic welding. The bundle of the positive electrode current collecting tab 21D is electrically connected to a corresponding terminal (positive terminal) among 27A and 27B, via one or more positive electrode leads including the positive electrode backup lead 31A and the positive electrode terminal lead 32A. In this case, the connection between the positive electrode current collecting tab 21D and the positive electrode lead, the connection between the positive leads, and the connection between the positive lead and the positive terminal are realized through a welding process such as ultrasonic welding. Herein, the positive leads are made of a metal, etc. having electric conductivity. The positive electrode current collecting tab 21D and the positive electrode leads are electrically insulated from the container 3 by an insulating member (not shown).

Similarly, the negative electrode current collecting tab 22D of the electrode group 10 is bundled through a welding process, such as ultrasonic welding. The bundle of the negative electrode current collecting tab 22D is electrically connected to a corresponding terminal (negative terminal) among 27A and 27B, via one or more negative electrode leads including the negative electrode backup lead 31B and the negative electrode backup lead 32B. In this case, the connection between the negative electrode current collecting tab 22D and the negative electrode lead, the connection between the negative leads, and the connection between the negative lead and the negative terminal are realized through a welding process, such as ultrasonic welding. Herein, the negative electrode leads are made of a metal, etc. having electric conductivity. The negative electrode current collecting tab 22D and the negative electrode leads are electrically insulated from the container 3 by an insulating member (not shown).

FIGS. 8 and 9 are diagrams showing the structure of the terminal 27A (27B) of the secondary battery 1. In FIGS. 8 and 9, the terminal 27A (27B) is viewed from different directions. As shown in FIGS. 8 and 9, each of the terminals 27A and 27B includes a head part 61 and a stem part 62. The stem part 62 engages a hole (not shown) formed in a corresponding one of the tilted surfaces 26A and 26B, and is inserted into the inside of the accommodating space 11 through this hole. Through the engagement of the stem part 62 with the hole, the terminals 27A and 27B are attached to a corresponding tilted surface among 26A and 26B. The head part 61 of each of the terminals 27A and 27B protrudes outward from the corresponding one of the tilted surfaces 26A and 26B.

The head part 61 includes terminal surfaces 63 through 68. The terminal surface (terminal inward surface) 63 of each of the terminals 27A and 27B faces inward, and faces a corresponding one of the tilted surfaces 26A and 26B, with a corresponding one of the insulating members 28A and 28B being interposed therebetween. The terminal surface 63 of the terminal 27A is parallel or substantially parallel to the tilted surface 26A, and abuts the insulating member 28A having surface contact with the insulating member 28A. The terminal surface 63 of the terminal 27B is parallel or substantially parallel to the tilted surface 26B, and abuts the insulating member 28B having surface contact with the insulating member 28B.

In each of the terminals 27A and 27B, each of the terminal surfaces (terminal side surfaces) 64 and 65 faces outward in the depth direction of the secondary battery 1. In each of the terminals 27A and 27B, the terminal surface 64 constitutes one outer edge according to the depth direction of the secondary battery 1. The terminal surface 65 constitutes the other outer edge according to the depth direction of the secondary battery 1. In the secondary battery 1, each of the terminal surfaces 64 and 65 of the terminals 27A and 27B is arranged inside of the outer edges (PI, P2; P3, P4) of a corresponding insulating member among 28A and 28B, in the depth direction.

The terminal surface (first terminal surface) 66 of each of the terminals 27A and 27B faces the same side as that faced by the outer surface of the bottom wall 7, according to the thickness direction of the secondary battery 1. The terminal surface 66 is parallel or substantially parallel to the bottom wall 7. In the secondary battery 1, the terminal surface 66 is located on the side where the flange 13 is located with respect to the outer surface of the bottom wall 7. In other words, the bottom wall 7 protrudes outward slightly in the thickness direction with respect to the terminal surface 66. The distance between the outer surface of the bottom wall 7 and the terminal surface 66 of each of the terminals 27A and 27B is in the order of 2 mm to 3 mm.

The terminal surface (second terminal surface) 67 extends from the terminal surface 66 toward the side where the flange 13 is located. In each of the terminals 27A and 27B, the terminal surface 67 constitutes the outer edge according to the lateral direction of the secondary battery 1. The terminal surface 67 of the terminal 27A is parallel or substantially parallel to the side wall (first side wall) 8A, and the terminal surface of the terminal 27B is parallel or substantially parallel to the side wall (first side wall) 8B. In the present embodiment, the terminal surface 67 of each of the terminals 27A and 27B slightly protrudes outward with respect to a corresponding one of the side walls 8A and 8B. In the secondary battery 1, the flange 13 and the second container member 6 protrude outward with respect to the terminal surface 67 of each of the terminals 27A and 27B. In other words, the outer peripheral edges of the flange 13 and the second container member 6 are located outside of the terminal surface (outer edge surface) 67 of each of the terminals 27A and 27B in the lateral direction of the secondary battery 1.

The terminal surface 67 of the terminal 27A protrudes outward slightly with respect to the outer surface of the insulating member 28A, or is flush or substantially flush with the outer surface of the insulating member 28A. The terminal surface 67 of the terminal 27B protrudes outward slightly with respect to the outer surface of the insulating member 28B, or is flush or substantially flush with the outer surface of the insulating member 28B.

The terminal surface (third terminal surface) 68 extends between the terminal surfaces 66 and 67, facing outward. The terminal surface 68 of the terminal 27A is parallel or substantially parallel to the tilted surface 26A, and the terminal surface 68 of the terminal 27B is parallel or substantially parallel to the tilted surface 26B. In the secondary battery 1, the terminal surface (terminal tilted surface) 68 of each of the terminals 27A and 27B is inwardly tilted in the lateral direction as the surface becomes closer to the terminal surface (first terminal surface) 66 from the terminal surface (second terminal surface) 67. Thus, in each of the terminals 27A and 27B, the terminal surface (third terminal surface) 68 creates an obtuse angle at the intersection with the terminal surface (first terminal surface) 66, and creates an obtuse angle at the intersection with the terminal surface (second terminal surface) 67.

The dimension L1 of each of the terminals 27A and 27B in the depth direction of the secondary battery 1 is 27% to 60%, more preferably 27% to 31%, of the dimension L2 of each of the side walls 9A and 9B in the depth direction. Herein, in each of the terminals 27A and 27B, the distance between the terminal surfaces 64 and 65 corresponds to the dimension L1. In one example, the dimension L1 of each of the terminals 27A and 27B in the depth direction of the secondary battery 1 is from 23 mm to 50 mm, more preferably from 23 mm to 26 mm.

As shown in FIGS. 2 and 6, the attachment member 50 is substantially plate-shaped and attached to the first container member 5 of the container 3. The attachment member 50 has an outer edge E. The attachment member 50 includes a base 51 and side plate parts 52A and 52B. The base 51 constitutes a part of the outer edge E of the attachment member 50. The base 51 abuts the outer surface of the bottom wall 7. In the state where the attachment member 50 is attached to the first container member 5, the base 51 extends parallel or substantially parallel to the bottom wall 7, and extends parallel or substantially parallel to the depth direction and the lateral direction of the secondary battery 1. For this reason, in the base 51, the thickness direction of the attachment member 50 is parallel or substantially parallel to the thickness direction of the secondary battery 1. In the present embodiment, the base 51 has surface contact with the entirety or substantially the entirety of the outer surface of the bottom wall 7. Herein, as described above, the terminal surface 66 of each of the terminals 27A and 27B is located on the side where the flange 13 is located, with respect to the outer surface of the bottom wall 7. For this reason, the base 51 is not in contact with the terminals 27A and 27B.

The base 51 protrudes outward with respect to the side walls 9A and 9B. The side plate part 52A extends from the protruding end of the base 51 from the side wall 9A or the vicinity thereof, toward the side where the flange 13 is located. The side plate part 52B extends from the protrusion end of the base 51 from the side wall 9B or the vicinity thereof, toward the side where the flange 13 is located. In other words, each of the side plate part 52A and 52B protrudes with respect to the base 51, toward the side where the flange 13 is located. In the state where the attachment member 50 is attached to the first container member 5, each of the side plate part 52A and 52B extends parallel or substantially parallel to the side wall (second side walls) 9A and 9B, and extends parallel or substantially parallel to the lateral direction and the thickness direction of the secondary battery 1. For this reason, in each of the side plate parts 52A and 52B, the thickness direction of the attachment member 50 is parallel or substantially parallel to the depth direction of the secondary battery 1.

The side plate part 52A is provided around the entirety or substantially the entirety of the range within which the side wall 9A extends, in the circumferential direction of the opening 12. The side plate part 52B is provided around the entirety or substantially the entirety of the range within which the side wall 9B extends, in the circumferential direction of the opening 12. Thus, in the present embodiment, the side plate part of the attachment member 50 constituted by the side plate parts 52A and 52B is provided only in the range within which the side walls (second side walls) 9A and 9B extend, in the circumferential direction of the opening 12. The side plate parts 52A and 52B are not provided in the range in which the side walls (first side walls) 8A and 8B extend and the range in which the terminals 27A and 27B are provided, according to the circumferential direction of the opening 12.

The side plate part 52A faces the outer surface of the side wall 9A from the outer side of the depth direction, and the side plate part 52B faces the outer surface of the side wall 9B from the outer side of the depth direction. The side plate part 52A faces the outer surface of the side wall 9A, with a gap 56A provided between the side plate part 52A and the side wall 9A. Thus, within the range in which the side wall 9A extends in the circumferential direction of the opening 12, the gap 56A is formed adjacently to the inner side of the side plate part 52A, and the gap 56A is formed along the lateral direction of the secondary battery 1. The side plate part 52B faces the outer surface of the side wall 9B, with a gap 56B provided between the side plate part 52B and the side wall 9B. Thus, within the range in which the side wall 9B extends in the circumferential direction of the opening 12, the gap 56B is formed adjacently to the inner side of the side plate part 52B, and the gap 56B is formed along the lateral direction of the secondary battery 1. In the present embodiment, the protrusion ends of the side plate parts 52A and 52B from the base 51 constitute a part of the outer edge E of the attachment member 50.

In the present embodiment, each of the side plate parts 52A and 52B extends toward the side opposite to the side where the base 51 is located, beyond the flange 13 and the second container member 6. In the present embodiment, each of the side plate parts 52A and 52B extends through the outer side of the outer peripheral edge (outer edge) of each of the flange 13 and the second container member 6. However, in one example, the protrusion end of each of the side plate part 52A and 52B from the base 51 may be located on the side where the base 51 is located, with respect to the flange 13 and the second container member 6. In this case, each of the side plate parts 52A and 52B may be located inside of the outer peripheral edge of each of the flange 13 and the second container member 6.

The entire attachment member 50 may be made of an insulating layer made of a resin, etc. having electrically insulating properties, or may have a structure formed from stacking an insulating layer and a metal layer. The insulating layer continuously extends from the center of the base 51 up to the outer edge E of the attachment member 50, and continuously extends from the base 51 up to the protrusion end of each of the side plate parts 52A and 52B. Furthermore, in the base 51 and the side plate parts 52A and 52B, the entirety or substantially the entirety of the surface facing the side opposite to that containing the location of the first container member 5 is made of an insulating layer. Herein, a resin that forms into the insulating layer may be polyethylene or polypropylene, for example. If the attachment member 60 is constituted by an insulating layer and a metal layer, for example, the layer thickness of the insulating layer is in the order of 0.05 mm to 0.3 mm in the attachment member 60. The thickness of the attachment member 50 is in the order of 0.6 mm to 1.2 mm, which is very small. In the present embodiment, a path for a coolant that cools the secondary battery 1 is defined in each of the gaps 56A and 56B. A gas such as air, or a liquid such as water may be used as the coolant.

### <Arrangement of Secondary Batteries in Battery Pack>

In the battery pack 70, a plurality of secondary batteries 1A through 1H, each having the same configuration as the above-described secondary battery 1, are stacked (arranged). As shown in FIG. 1, in the battery pack 70, each of the secondary batteries 1A to 1H are stacked in such a manner that the thickness direction is parallel or substantially parallel to the stacking direction. Furthermore, the secondary batteries 1A through 1H are arranged in such a manner that the depth direction is parallel or substantially parallel to the first intersecting direction, and the lateral direction is parallel or substantially parallel to the second intersecting direction.

Hereinafter, two adjacently arranged (stacked) secondary batteries among the secondary batteries 1A through 1H will be referred to as "secondary battery 1α" and "secondary battery 1β", respectively. In the example shown in FIG. 1, the secondary battery (first secondary battery) 1α is one of the secondary batteries 1A to 1G, and the secondary battery (second secondary battery) 1β is corresponding one of the secondary batteries 1B to 1H. In the battery pack 70, the second container member 6 of the secondary battery 1α faces the bottom wall 7 of the secondary battery 1β, with the base 51 of the attachment member 50 of the secondary battery 1β being interposed therebetween. For this reason, contact between the second container member 6 of the secondary battery 1α and the first container member 5 of the secondary battery 1β can be prevented by the attachment member 50 of the secondary battery 1β. It is thereby possible to prevent the contact between the containers 3 of the secondary battery 1α and the secondary battery 1β, and an electrical connection therebetween can be effectively prevented.

In the battery pack 70, the secondary batteries 1α and 1β are adjacently arranged without or almost without any deviation from each other in the first intersecting direction. The secondary batteries 1α and 1β are arranged without or almost without any deviation from each other in the second intersecting direction. The secondary batteries 1α and 1β have the same or substantially the same dimension in each of the depth, lateral, and thickness directions.

Since the secondary batteries 1A through 1H are stacked in the above-described manner, in each of the secondary batteries 1α and 1β of the battery pack 70, the side walls (first side walls) 8A and 8B extend in the first intersecting direction, and the side walls (second side walls) 9A an 9B extend in the second intersecting direction. Furthermore, in each of the secondary batteries 1α and 1β, each of the tilted surfaces 26A and 26B is continuous between the side walls 9A an 9B, along the first intersecting direction. Each of the tilted surfaces 26A and 26B is inwardly tilted in the second intersecting direction as the surface nears the bottom wall 7.

In the secondary batteries 1α and 1β, the terminal 27A is arranged at a location inside of the outer edges (PI, P2) of the insulating member 28A, in the first intersecting direction. The terminal 27B is arranged at a location inside of the outer edges (P3, P4) of the insulating member 28B, in the first intersecting direction. In the secondary batteries 1α and 1β, the flange 13 and the second container member 6 protrude outward in the second intersecting direction, with respect to the terminal surface (outer edge surface) 67 of each of the terminals 27A and 27B. In other words, the outer peripheral edges of the flange 13 and the second container member 6 are located outside of the terminal surface 67 of each of the terminals 27A and 27B according to the second intersecting direction. In each of the secondary batteries 1α and 1β, the dimension L1 of the terminals 27A and 27B in the first intersecting direction is 27% to 60%, more preferably 27% to 31%, of the dimension L2 between the side walls (second side walls) 9A and 9B in the first intersecting direction.

### <Connecting Members and Electrical Connection Made by the Connecting Members>

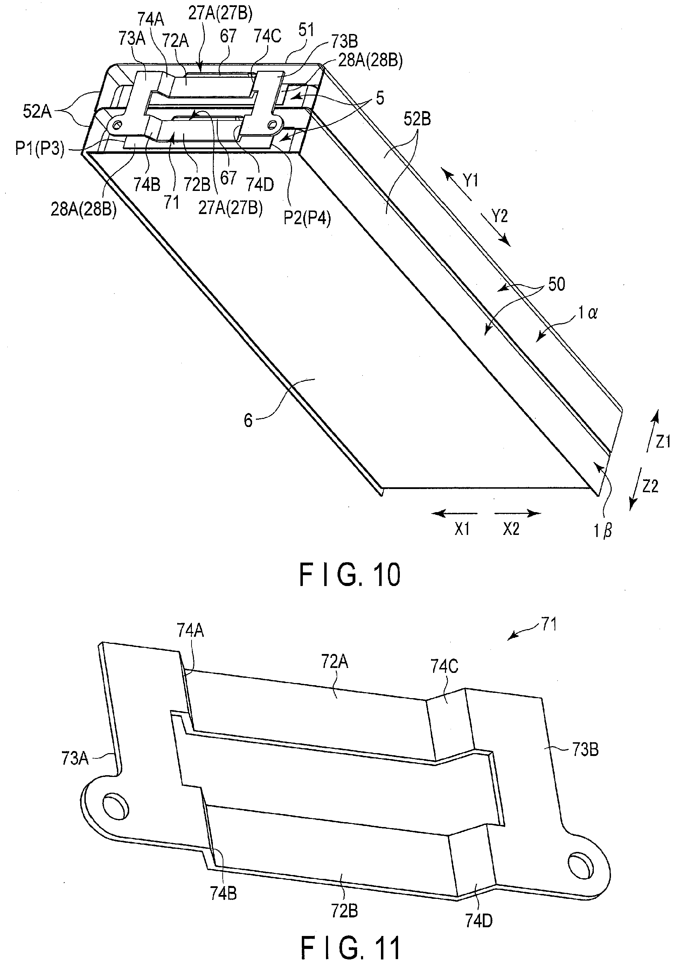

FIG. 10 is a diagram showing a structure that electrically connects the adjacently stacked secondary batteries 1α and 1β in the battery pack 70. As shown in FIG. 10, the secondary batteries 1α and 1β are electrically connected by a bus bar 71 that is a connecting member. The bus bar 71 is made of a metal having electric conductivity. In the battery pack 70, an object terminal, which is a corresponding terminal among 27A and 27B of the secondary battery 1α, is connected to an object terminal, which is a corresponding terminal among 27A and 27B of the secondary battery 1β, by the bus bar 71. The object terminal (27A or 27B) of the secondary battery 1α and the object terminal (27A or 27B) of the secondary battery 1β, which are connected by the bus bar 71, are located on the same side in relation to the center of the battery pack 70 in the second intersecting direction. In other words, the object terminal (27A or 27B) of the secondary battery 1α and the object terminal (27A or 27B) of the secondary battery 1β are located on the same side as each other relative to the accommodating space 11 of the secondary batteries 1α and 1β in the second intersecting direction.

In the example shown in FIG. 1, the bus bar 71 connects the terminals located on one side in relation to the center of the battery pack 70 according to the second intersecting direction (the arrow Y1 side) in the secondary batteries 1B and 1C, in the secondary batteries 1D and 1E, and in the secondary batteries 1F and 1G, respectively. The bus bar 71 connects the terminals located on the other side in relation to the center of the battery pack 70 according to the second intersecting direction (the arrow Y2 side) in the secondary batteries 1A and 1B, in the secondary batteries 1C and 1D, in the secondary batteries 1E and 1F, and in the secondary batteries 1G and 1H, respectively.

In the example of FIG. 1, the secondary batteries 1α and 1β are electrically connected in series. Accordingly, one of two object terminals connected by the bus bar 71 is a positive electrode terminal, and the other is a negative electrode terminal. In another example, the secondary batteries 1α and 1β may be electrically connected in parallel. In this case, the positive electrode terminals of the secondary batteries 1α and 1β are connected by the bus bar 71 on one side of the second intersecting direction with respect to the center of the battery pack 70. The negative electrode terminals of the secondary batteries 1α and 1β are connected by the bus bar 71 on the other side of the second intersecting direction with respect to the center of the battery pack 70.

FIG. 11 shows the structure of the bus bar 71. As shown in FIGS. 1, 10, and 11, the bus bar 71 includes a connector part (first connector part) 72A in contact with an object terminal (27A or 27B) of the secondary battery (first secondary battery) 1α, and a connector part (second connector part) 72B in contact with an object terminal (27A or 27B) of the secondary battery (second secondary battery) 1β. Each of the connector parts (contact parts) 72A and 72B has surface contact with a corresponding object terminal (27A or 27B) from the outer side of the second intersecting direction of the battery pack 70, and is connected to the corresponding object terminal (27A or 27B) by welding, etc. Each of the connector parts 72A and 72B has surface contact with the terminal surface (second terminal surface) 67 at the corresponding object terminal (27A or 27B). Thus, in the object terminal (27A or 27B) of the secondary battery 1α, the terminal surface 67 is a surface in contact with the connector part 72A, and in the object terminal (27A or 27B) of the secondary battery 1β, the terminal surface 67 is a surface in contact with the connector part 72B.

In the present embodiment, the connector parts 72A and 72B are located inside of the outer peripheral edge of the flange 13 of each of the secondary batteries 1α and 1β according to the second intersecting direction. Each of the connector parts 72A and 72B extends in the first intersecting direction, and also in the depth direction of each of the secondary batteries 1α and 1β. Each of the connector parts (contact parts) 72A and 72B extends outward in the first intersecting direction beyond the outer edges (terminal surfaces 64 and 65) of a corresponding object terminal (27A or 27B).

The bus bar 71 includes bridge parts 73A and 73B that bridge the connector parts 72A and 72B. Each of the bridge parts 73A and 73B extends in the stacking direction (arrangement direction). The bridge part (first bridge part) 73A is arranged on one side away from the object terminal (27A or 27B) which is in contact with each of the connector part 72A and 72B, in the first intersecting direction. The bridge part (second bridge part) 73B is arranged on the side opposite to the gridge part 83A away from the object terminal (27A or 27B) which is in contact with each of the connector part 72A and 72B, in the first intersecting direction. The connector parts 72A and 72B, and the object terminals (27A or 27B) to which the connector parts 72A and 72B are connected respectively are provided between the bridge parts 73A and 73B, according to the first intersecting direction.

In the bus bar 71, a riser (first riser) 74A is provided between the connector part 72A and the bridge part 73A, and another riser (second riser) 74B is provided between the connector part 72B and the bridge part 73A. Similarly, a riser (third riser) 74C is provided between the connector part 72A and the bridge part 73B, and another riser (fourth riser) 74D is provided between the connector part 72B and the bridge part 73B. Each of the risers 74A through 74D is arranged outside of the object terminal (27A or 27B) which is in contact with the connector part 72A or 72B, in the first intersecting direction. Because of the risers 74A and 74B, the bridge part 73A is located on the outer side with respect to the connector parts 72A and 72B according to the second intersecting direction. Similarly, because of the risers 74C and 74D, the bridge part 73B is located on the outer side with respect to the connector parts 72A and 72B in the second intersecting direction. With the above-described structure, the bus bar 71 has an approximate O shape, when viewed from the outer side of the second intersecting direction.

As described above, in each of the secondary batteries 1α and 1β, the object insulating member (28A or 28B), which corresponds to either insulating member 28A or 28B, electrically insulates the object terminal (27A or 27B) from the first container member 5. In the present embodiment, the risers 74A and 74C are located within the range in which the object insulating member (28A or 28B) of the secondary battery 1α extends, according to the first intersecting direction. The risers 74B and 74D are located within the range in which the object insulating member (28A or 28B) of the secondary battery 1β extends, according to the first intersecting direction. For this reason, the riser (first riser) 74A is located on the inner side with respect to one outer edge (PI; P3) of the object insulating material (28A or 28B) of the secondary battery 1α in the first intersecting direction, and the riser (second riser) 74B is located on the inner side with respect to one outer edge (PI; P3) of the object insulating material (28A or 28B) of the secondary battery 1β according to the first intersecting direction. Further, the riser (third riser) 74C is located on the inner side with respect to the other outer edge (P2; P4) of the object insulating material (28A or 28B) of the secondary battery 1α in the first intersecting direction, and the riser (fourth riser) 74D is located on the inner side with respect to the other outer edge (P2; P4) of the object insulating material (28A or 28B) of the secondary battery 1β according to the first intersecting direction. Accordingly, the risers 74A through 74D are provided between the both outer edges (PI, P2; P3, P4) of the object insulating member (28A or 28B) of the secondary battery 1α in the first intersecting direction. The risers 74A through 74D are provided between the both outer edges (PI, P2; P3, P4) of the object insulating member (28A or 28B) of the secondary battery 1β in the first intersecting direction. In an example, the risers 74A and 74C are located on the outer side relative to the range in which the object insulating member (28A or 28B) of the secondary battery 1α extends, in the first intersecting direction. The risers 74B and 74D are located on the outer side relative to the range in which the object insulating member (28A or 28B) of the secondary battery 1β extends, in the first intersecting direction.

In the outermost secondary battery 1A on the arrow Z1 side of the stacking direction in the battery pack 70, a bus bar 75A, which is a connecting member, is connected to one of the terminals 27A or 27B. In the outermost secondary battery 1H on the arrow Z2 side of the stacking direction, a bus bar 75B, which is a connecting member, is connected to the other of the terminals 27A or 27B. Each of the bus bars 75A and 75B is made of a metal having electric conductivity, similarly to the bus bar 71. In the secondary battery 1A, the other of the terminals 27A or 27B is connected to the secondary battery 1B via the bus bar 71. In the secondary battery 1H, the other of the terminals 27A or 27B is connected to the secondary battery 1G via the bus bar 71.

The bus bar 75A includes a connector part 76A in contact with one of the terminals 27A or 27B of the secondary battery 1A, and the bus bar 75B includes a connector part 76B in contact with one of the terminals 27A or 27B of the secondary battery 1H. In the present embodiment, each of the connector part 76A and 76B has surface contact with a corresponding terminal (27A or 27B) from the outer side of the second intersecting direction. Each of the connector parts 76A and 76B is in contact with the terminal surface (second terminal surface) 67 at the corresponding object terminal (27A or 27B). Each of the connector parts 76A and 76B is placed in contact with the terminal surface 67 of the corresponding object terminal (27A or 27B) through a welding process, etc. Each of the connector parts 76A and 76B extends in the first intersecting direction.

Each of the bus bars 75A and 75B includes an external terminal (77A; 77B). One of the external terminals 77A and 77B is a positive electrode terminal of the battery pack 70, while the other is a negative electrode terminal of the battery pack 70. The external terminal 77A is arranged on one side away from the terminal (27A or 27B) in contact with the connector part 76A, in the first intersecting direction. The external terminal 77B is arranged on one side away from the terminal (27A or 27B) in contact with the connector part 76B, in the first intersecting direction.

In the bus bar 75A, a riser 78A is provided between the connector part 76A and the external terminal 77A, and in the bus bar 75B, a riser 78B is provided between the connector part 76B and the external terminal 77B. Because of the riser 78A, the external terminal 77A is located on the outer side with respect to the connector part 76A in the second intersecting direction, and located on the outer side with respect to the outer peripheral edges of the flange 13 and the second container member 6 of the secondary battery 1A. Because of the riser 78B, the external terminal 77B is located on the outer side with respect to the connector part 76B in the second intersecting direction, and located on the outer side with respect to the outer peripheral edges of the flange 13 and the second container member 6 of the secondary battery 1H.

In the bus bar 71, which is a connecting member in the present embodiment, because of the risers 74A and 74B, the bridge part 73A is located on the outer side with respect to the connector parts 72A and 72B in the second intersecting direction. Similarly, because of the risers 74C and 74D, the bridge part 73B is located on the outer side with respect to the connector parts 72A and 72B according to the second intersecting direction. Each of the bridge part 73A and 73B extends through a region on the outer side relative to the outer peripheral edges of the flange 13 and the second container member 6, according to the second intersecting direction. It is thereby possible to effectively prevent bus bar 71 interference (contact) with the container 3 of each of the secondary batteries 1α and 1β. Thus, an electrical connection between the container 3 of the secondary batteries 1α and 1β via the bus bar 71 can be prevented.

In the bus bar 71 having the above-described structure, the connector part 72A connected to an object terminal (27A or 27B) of the secondary battery 1α is provided at a location lying closer to the container 3 of the secondary battery 1α than the location of the bridge parts 73A and 73B. Similarly, the connector part 72B connected to an object terminal (27A or 27B) of the secondary battery 1β is provided at a location lying closer to the container 3 of the secondary battery 1β than the location of the bridge parts 73A and 73B . In the present embodiment, however, the risers 74A through 74D are provided between the outer edges (PI, P2; P3, P4) of the object insulating member (28A or 28B) of the secondary battery 1α in the first intersecting direction. The risers 74A through 74D are provided between the outer edges (PI, P2; P3, P4) of the object insulating member (28A or 28B) of the secondary battery 1β in the first intersecting direction. For this reason, in the secondary battery 1α, the contact between the connector part 72A and the container 3 can be prevented by an object insulating member (28A or 28B) corresponding to the insulating member 28A or 28B. Similarly, in the secondary battery 1β, the contact between the connector part 72B and the container 3 can be prevented by an object insulating member (28A or 28B). It is possible to more effectively prevent bus bar 71 interference (contact) with the container 3 of each of the secondary batteries 1α and 1β.

Since each of the connector parts 72A and 72B has surface contact with an object terminal (27A or 27B), a large contact area therebetween can be secured. It is thereby possible to securely connect the object terminals to each other by the bus bar 71. Since a large area of contact between each of the connector part 72A and 72B and an object terminal (27A or 27B) can be secured, a large cross-sectional area of a conductive path can be secured in the contact between each of the connector part 72A and 72B and an object terminal (27A or 27B), and electric resistance of the conductive path can be thereby reduced.

In the present embodiment, each of the connector parts 72A and 72B extends in the first intersecting direction, and also in the depth direction of the secondary batteries 1α and 1β. In each of the secondary batteries 1α and 1β having the above-described structure, the dimensions of the terminals 27A and 27A in the lateral direction and the terminals 27A and 27A in the thickness direction scarcely increase; however, it is possible to increase the dimension of the terminals 27A and 27B in the depth direction. In other words, it is possible to increase the dimension of the terminals 27A and 27B in the first intersecting direction of the battery pack 70 in each of the secondary batteries 1α and 1β. Actually, in each of the secondary batteries 1α and 1β, it is possible to increase the dimension of the terminals 27A and 27B in the first intersecting direction up to the order of 60% of the dimension thereof between the side walls 9A and 9B in the first intersecting direction, and up to the order of 50 mm. Thus, each of the connector parts 72A and 72B extends along the first intersecting direction, and it is thereby possible to further increase the area of the contact between each of the connector parts 72A and 72B and the object terminal (27A or 27B).

Furthermore, in the present embodiment, each of the risers 74A through 74D is arranged on the outer side with respect to the object terminal (27A or 27B) which is in contact with the connector part 72A or 72B, according to the first intersecting direction. It is thereby possible for each of the connector parts 72A and 72B to be in contact with the object terminal (27A or 27B) over the entire or substantially entire dimension of the object terminal (27A or 27B) in the first intersecting direction. It is thus possible to further increase the area of the contact between each of the connector parts 72A and 72B and the object terminal (27A or 27B).

The bus bar 71 includes a pair of the bridge parts 73A and 73B, and the connector parts 72A and 72B and the object terminals (27A or 27B), to which the connector parts 72A and 72B are connected respectively, are provided between the bridge parts 73A and 73B in the first intersecting direction. For this reason, it is possible to effectively prevent significant variations in the distance between the connector parts 72A and 72B due to external force, etc., and to maintain a constant or substantially constant distance. Thus, in the operation which connects the bus bar 71 to the secondary batteries 1α and 1β, the ease with which the connector part 72A can be brought into surface contact with an object terminal (27A or 27B) of the secondary battery 1α increases, as does the ease of bringing the connector part 72B into surface contact with an object terminal (27A or 27B) of the secondary battery 1β. It is thereby possible to improve the workability in the operation of connecting the bus bar 71 between the secondary batteries 1α and 1β. Since two bridge parts 73A and 73B are provided between the connector parts 72A and 72B, electric resistance of the conductive path between the connector parts 72A and 72B becomes smaller.

In the secondary battery 1α, the terminal surface (second terminal surface) 67 of the object terminal (27A or 27B), with which the connector part 72A has surface contact, is parallel or substantially parallel to a corresponding side wall among 8A and 8B. Similarly, in the secondary battery 1β, the terminal surface (second terminal surface) 67 of the object terminal (27A or 27B), with which the connector part 72B has surface contact, is parallel or substantially parallel to a corresponding side wall among 8A and 8B. For this reason, in the operation of connecting the bus bar 71 to the secondary batteries 1α and 1β, it becomes easier to bring the connector part 72A into surface contact with an object terminal (27A or 27B) of the secondary battery 1α, and to bring the connector part 72B into surface contact with an object terminal (27A or 27B) of the secondary battery 1β.

Furthermore, in the secondary battery 1α, the terminal surface (second terminal surface) 67 of the terminal (27A or 27B), which has surface contact with the connector part 72A, protrudes outward slightly with respect to the outer surface of a corresponding side wall among 8A and 8B. Similarly, in the secondary battery 1β, the terminal surface (second terminal surface) 67 of the terminal (27A or 27B), which has surface contact with the connector part 72B, protrudes outward slightly with respect to the outer surface of a corresponding side wall among 8A and 8B. For this reason, in the operation which connects the bus bar 71 to the secondary batteries 1α and 1β, it becomes easier to bring the connector part 72A into surface contact with an object terminal (27A or 27B) of the secondary battery 1α, and to bring the connector part 72B into surface contact with an object terminal (27A or 27B) of the secondary battery 1β.

### (Modifications)

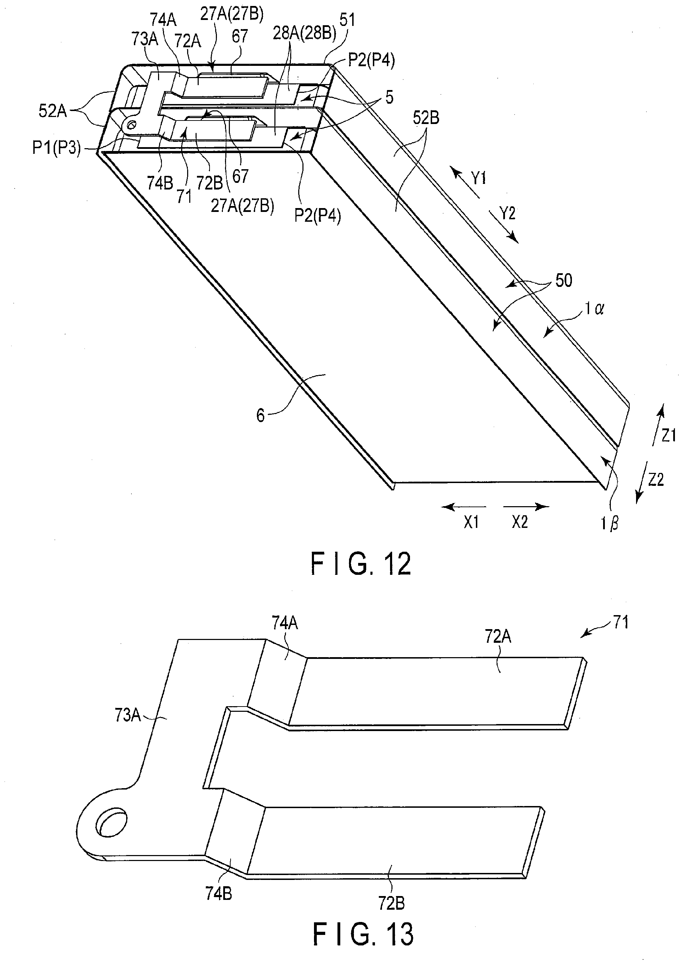

In a first modification shown in FIGS. 12 and 13, the bus bar 71 is constituted only by connector parts 72A and 72B, a bridge part 73A, and a risers 74A and 74B, and the bridge part 73B and the risers 74C and 74D are not provided in the bus bar 71. In this case, the bus bar 71 is approximately U-shaped when externally viewed in the second intersecting direction.

In the present modification, the connector part (first connector) 72A has surface contact with an object terminal (27A or 27B) of the secondary battery (first secondary battery) 1α from the outer side of the second intersecting direction, and the connector part (second connector) 72B has surface contact with an object terminal (27A or 27B) of the secondary battery (second secondary battery) 1β from the outer side of the second intersecting direction. Each of the connector parts 72A and 72B extends in the first intersecting direction. The bridge part 73A is provided at a location away from the object terminal (27A or 27B) of the secondary batteries 1α and 1β toward the outer side, according to the first intersecting direction. Because of the riser (first riser) 74A and the riser (second riser) 74B, the second bridge part 73A is located on the outer side with respect to the connector parts 72A and 72B in the second intersecting direction. The bridge part 73A bridges the connector parts 72A and 72B, with passing through a region on the outer side relative to the flange 13 of the secondary battery 1α according to the second intersecting direction.

With the above-described structure, even in the present modification, the bus bar (connecting member) 71 is prevented from interfering with the container 3 of the secondary batteries 1α and 1β, and a large area of contact between an object terminal (27A or 27B) of each of the secondary batteries 1α and 1β and the bus bar 71 can be secured.

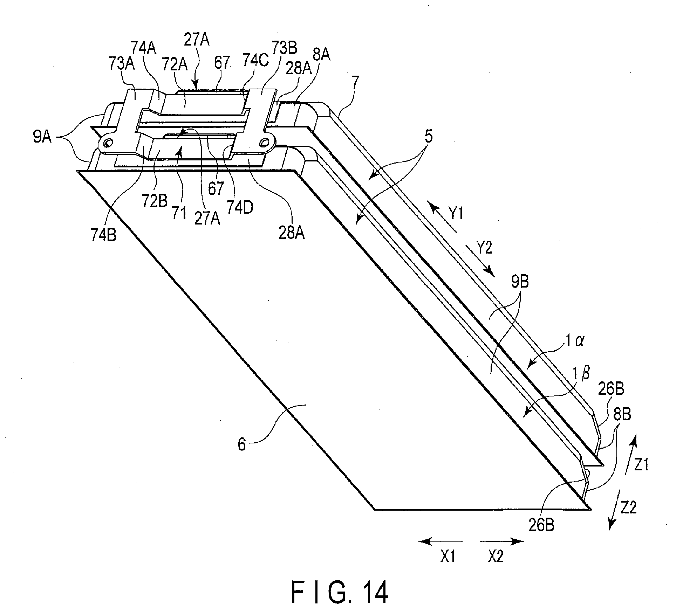

In the second modification shown in FIG. 14, the attachment member 50 is not provided in the secondary battery 1, such as the secondary batteries 1α and 1β. Even in the present modification, however, the battery main body 2 is formed in the structure similar to the foregoing embodiment, etc. Even in the battery pack 70 of the present modification, the secondary batteries 1α and 1β are adjacently arranged to each other in the stacking direction. The second container member 6 of the secondary battery 1α faces the bottom wall 7 of the secondary battery 1β. Even in the present modification, the bus bar 71 electrically connects between the secondary batteries 1α and 1β, similarly to the foregoing embodiment, etc.

In the present modification, it is preferable to arrange an insulating plate (not shown) having electrically insulating properties between the secondary batteries 1α and 1β in the stacking direction. In this case, the second container member 6 of the secondary battery 1α faces the bottom wall 7 of the secondary battery 1β, with the insulating plate being interposed therebetween. For this reason, contact between the second container member 6 of the secondary battery 1α and the first container member 5 of the secondary battery 1β can be prevented by the insulating plate. It is thereby possible to prevent contact between the containers 3 of the secondary battery 1α and the secondary battery 1β, and an electrical connection therebetween can be effectively prevented.

In one modification, a plurality of electrode groups may be accommodated in the accommodating space 11. In another modification, the second container member 6 may be shaped in the form of a tube with a bottom, and not in a plate, similarly to the first container member 5. In this case, the second container member 6 is formed so as to include a bottom wall, side walls, and a flange. The flange 13 of the first container member 5 and the flange of the second container member 6 are hermetically welded at the welding part 35. Even in the secondary battery 1 of the present modification, the flange 13 and the second container member 6 are hermetically welded at the welding part 35 along the perimeter of the circumferential direction of the opening 12. The accommodating space 11 that accommodates the electrode group 10 is hermetically enclosed from the outside of the container 3.

In at least one of the embodiment and examples, the connecting member connects two secondary batteries stacked in the stacking direction. Each of the secondary batteries includes a side wall along the first intersecting direction that intersects with the stacking direction, a terminal provided within a range in which the side wall extends in the circumferential direction, and a flange protruding outward from the side wall. Each of the connector parts of the connecting member has, in a corresponding secondary battery, surface contact with the terminal from the outer side in the second intersecting direction, which intersects with the stacking direction and the first intersecting direction. The bridge part is located on the outer side with respect to the connector parts in the second intersecting direction by the risers, and bridges the connector parts with passing through the region on the outer side relative to the flange of one of the secondary batteries. Thus, a connecting member that electrically connects two secondary batteries, securely connects the terminals of the batteries, and does not interfere with parts other than the terminals can be provided.

While certain embodiments have been described, these embodiments have been presented by way of example only, and are not intended to limit the scope of the inventions.

## Claims

1. A battery pack (70) comprising:
a first secondary battery (1α) and a second secondary battery (1β) adjacently stacked in a stacking direction (Z1, Z2), wherein
each of the first secondary battery (1α) and the second secondary battery (1β) comprises a first container member (5) and a second container member (6) both made of a metal, an electrode group (10) including a positive electrode (21) and a negative electrode (22), and a pair of terminals (27A, 27B),
in each of the first secondary battery (1α) and the second secondary battery (1β),
the first container member (5) includes a bottom wall (7); a pair of first side walls (8A, 8B) along a first intersecting direction (X1, X2) that intersects with the stacking direction (27A, 27B); and a pair of second side walls (9A, 9B) along a second intersecting direction (Y1, Y2) that intersects with both the stacking direction (Z1, Z2) and the first intersecting direction (X1, X2); and the bottom wall (7), the first side walls (8A, 8B) and the second side walls (9A, 9B) define an accommodating space (11) configured to accommodate the electrode group (10),
the first container member (5) includes a flange protruding (13) outward relative to the first side walls (8A, 8B) and the second side walls (9A, 9B), the flange (13) being provided on a side opposite to a side where the bottom wall (7) is located in the first container member (5),
the second container member (6) faces the flange (13), with covering an opening (12) of the accommodating space (11), and
each of the terminals (27A, 27B) is attached to an outer surface of the first containing member (5), and provided in a range within which a corresponding one of the first walls (8A, 8B) extends in a circumferential direction of the opening (12), and
the first secondary battery (1α) and the second secondary battery (1β) are arranged in a state in which the second container member (6) of the first secondary battery (1α) faces the bottom wall of the second secondary battery (1β),
a connecting member (71) that electrically connects the first secondary battery (1α) and the second secondary battery (1β), wherein the connecting member (71) comprises:
a first connector part (72A) having surface contact with an object terminal, which is one of the terminals (27A, 27B) of the first secondary battery (1α), from an outer side in the second intersecting direction (Y1, Y2), and extending along the first intersecting direction (X1, X2);
a second connector part (72B) having surface contact with an object terminal, which is one of the terminals (27A, 27B) of the second secondary battery (1β), from the outer side in the second intersecting direction (Y1, Y2), the object terminal being located on a same side as the object terminal of the first secondary battery (1α) with respect to an accommodating space of the first secondary battery (1α) and that of the second secondary battery (1β) in the second intersecting direction (Y1, Y2), the second connector part extending along the first intersecting direction (X1, X2);
a first bridge part (73A) provided away from the object terminals of the first secondary battery (1α) and the second secondary battery (1β) in the first intersecting direction (X1, X2), and bridging the first connector part (72A) and the second connector part (72B) through a region on the outer side with respect to the flange (13) of the first secondary battery (1α) in the second intersecting direction (Y1, Y2);
a first riser (74A) provided between the first connector part (72A) and the first bridge part (73A) so as to locate the first bridge part (73A) further outward in the second intersecting direction (Y1, Y2) than the first connector part (72A); and
a second riser (74B) provided between the second connector part (72B) and the first bridge part (73A) so as to locate the first bridge part (73A) further outward in the second intersecting direction (Y1, Y2) than the second connector part (72B),
**characterized in that** the connecting member (71) further comprises:
a second bridge part (73B) provided at a location on an opposite side of the first bridge (73A) and away from the object terminals of the first secondary battery (1α) and the second secondary battery (1β) in the first intersecting direction (Y1, Y2), and bridging the first connector part (72A) and the second connector part (72B) through the region on the outer side with respect to the flange (13) of the first secondary battery (1α) in the second intersecting direction (Y1, Y2);
a third riser (74C) provided between the first connector part (72A) and the second bridge part (73B) so as to locate the second bridge part (73B) further outward in the second intersecting direction (Y1, Y2) than the first connector part (72A); and
a fourth riser (74D) provided between the second connector part (72B) and the second bridge part (73B) so as to locate the second bridge part (73B) further outward in the second intersecting direction (Y1, Y2) than the second connector part (72B).

2. The battery pack according to claim 1, wherein
the first connector part (72A) is welded to the object terminal of the first secondary battery (1α), and
the second connector part (72B) is welded to the object terminal of the second secondary battery (1β).

3. The battery pack according to claim 1 or 2, wherein the first riser (74A) and the second riser (74B) are located on an outer side with respect to the object terminals of the first secondary battery (1α) and the second secondary battery (1β) in the first intersecting direction (X1, X2).

4. The battery pack (70) according to any one of claims 1-3, wherein
in each of the first secondary battery (1α) and the second secondary battery (1β), the flange (13) and the second container (6) protrude outward to a greater extent than the terminal (27A, 27B) in the second intersecting direction (Y1, Y2).

5. The battery pack (70) according to any one of claims 1-4, wherein
in each of the first secondary battery (1α) and the second secondary battery (1β),
the first container member (5) includes a pair of tilted surfaces (26A, 26B) tilted with respect to the bottom wall (7),
each of the tilted surfaces (26a, 26B) is provided between the bottom wall (7) and a corresponding one of the first side walls (8A, 8B), and is tilted so as to create an obtuse angle at the intersecting part with the bottom wall (7) and create an obtuse angle at the intersecting part with the corresponding one of the first side walls (8A, 8B), and
each of the terminals (27A, 27B) is attached to a corresponding one of the tilted surfaces (26A, 26B).

6. The battery pack (70) according to claim 5, wherein in each of the first secondary battery (1α) and the second secondary battery (1β), each of the tilted surfaces (26A, 26B) is continuous between the second side walls (9A, 9B) along the first intersecting direction (X1, X2).

7. The battery pack (70) according to claim 5 or 6, wherein
in each of the first secondary battery (1α) and the second secondary battery (1β), each of the terminals (27A, 27B) includes a head part (61) protruding outward from a corresponding one of the tilted surfaces (26A, 26B),
in each of the first secondary battery (1α) and the second secondary battery (1β), the head part (61) of each of the terminals (27A, 27B) includes:
a first terminal surface (66) parallel to the bottom wall (7);
a second terminal surface (67) that extends from the first terminal surface (66) toward a side where the flange (13) is located, and that is parallel to a corresponding one of first side walls (8A, 8B),
a third terminal surface (68) that extends between the first terminal surface (66) and the second terminal surface (67), and that is parallel to a corresponding one of the tilted surface (26A, 26B),
the first connector part (72A) is in surface contact with the second terminal surface (67) of the object terminal of the first secondary battery (1α), and
the second connector (72B) is in surface contact with the second terminal surface (67) of the object terminal of the second secondary battery (1β).

8. The battery pack (70) according to any one of claims 1 to 7, wherein
in each of the first secondary battery (1α) and the second secondary battery (1β), a dimension (L1) of each of the terminals (27A, 27B) in the first intersecting direction (X1, X2) is 27% to 60% of that (L2) between the second side walls (9A, 9B) in the first intersecting direction (X1, X2).

9. The battery pack (70) according to any one of claims 1 to 8, wherein
in each of the first secondary battery (1α) and the second secondary battery (1β), a dimension (L1) of each of the terminals (27A, 27B) in the first intersecting direction (X1, X2) is 23 mm to 50 mm.

10. The battery pack (70) according to any one of claims 1 to 9, wherein
each of the first secondary battery (1α) and the second secondary battery (1β) includes a pair of insulating members (28A, 28B), and
in each of the first secondary battery (1α) and the second secondary battery (1β),
each of the insulating members (28A, 28B) is interposed between the first container member (5) and a corresponding one of the terminals (27A, 27B), and
each of the terminals (27A, 27B) is arranged on an inner side with respect to an outer edge (PI, P2; P3, P4) of a corresponding one of the insulating members (28A, 28B) in the first intersecting direction (X1, X2).

11. The battery pack (70) according to claim 10, wherein
in each of the first secondary battery (1α) and the second secondary battery (1β), an object insulating member, which is a corresponding one of the insulating members (28A, 28B), interposes between the object terminal and the first container member (5), and
the first riser (74A) and the second riser (74B) of the connecting member (71) are located on an inner side with respect to an outer edge (PI, P2; P3, P4) of the object insulating member of the first secondary battery (1α) and the second secondary battery (1β) in the first intersecting direction (X1, X2).

## Patentansprüche

1. Batteriepack (70), das umfasst:
eine erste Sekundärbatterie (1α) und eine zweite Sekundärbatterie (1β), die in einer Stapelungsrichtung (Z1, Z2) benachbart gestapelt sind, wobei
jede von der ersten Sekundärbatterie (1α) und der zweiten Sekundärbatterie (1β) ein erstes Behälterelement (5) und ein zweites Behälterelement (6), die beide aus einem Metall bestehen, eine Elektrodengruppe (10), die eine positive Elektrode (21) und eine negative Elektrode (22) umfasst, und ein Paar Anschlüsse (27A, 27B) umfasst,
in jeder von der ersten Sekundärbatterie (1α) und der zweiten Sekundärbatterie (1β),
das erste Behälterelement (5) eine untere Wand (7); ein Paar erste Seitenwände (8A, 8B) entlang einer ersten Schnittrichtung (X1, X2), die sich mit der Stapelungsrichtung (27A, 27B) schneidet; und ein Paar zweite Seitenwände (9A, 9B) entlang einer zweiten Schnittrichtung (Y1, Y2) umfasst, die sich mit sowohl der Stapelungsrichtung (Z1, Z2) als auch mit der ersten Schnittrichtung (X1, X2) schneidet; und die untere Wand (7), die ersten Seitenwände (8A, 8B) und die zweiten Seitenwände (9A, 9B) einen Aufnahmeraum (11) definieren, der dazu ausgestaltet ist, die Elektrodengruppe (10) aufzunehmen,
das erste Behälterelement (5) einen Flansch (13) umfasst, der in Bezug auf die ersten Seitenwände (8A, 8B) und die zweiten Seitenwände (9A, 9B) hervorsteht, wobei der Flansch (13) auf einer Seite bereitgestellt ist, die einer Seite entgegengesetzt ist, an der sich die untere Wand (7) im ersten Behälterelement (5) befindet,
das zweite Behälterelement (6) dem Flansch (13) unter Abdeckung einer Öffnung (12) des Aufnahmeraums (11) zugewandt ist, und
jeder der Anschlüsse (27A, 27B) an einer äußeren Fläche des ersten Behälterelements (5) befestigt ist und in einem Bereich bereitgestellt ist, in dem eine entsprechende der ersten Wände (8A, 8B) sich in einer Umfangsrichtung der Öffnung (12) erstreckt, und
die erste Sekundärbatterie (1α) und die zweite Sekundärbatterie (1β) in einem Zustand angeordnet sind, in dem das zweite Behälterelement (6) der ersten Sekundärbatterie (1α) der unteren Wand der zweiten Sekundärbatterie (1β) zugewandt ist,
ein Verbindungselement (71), das die erste Sekundärbatterie (1α) und die zweite Sekundärbatterie (1β) elektrisch verbindet, wobei das Verbindungselement (71) umfasst:
einen ersten Verbinderteil (72A), der Flächenkontakt mit einem Objektanschluss, der einer der Anschlüsse (27A, 27B) der ersten Sekundärbatterie (1α) ist, von einer äußeren Seite in der zweiten Schnittrichtung (Y1, Y2) aufweist und sich entlang der ersten Schnittrichtung (X1, X2) erstreckt;
einen zweiten Verbinderteil (72B), der Flächenkontakt mit einem Objektanschluss, der einer der Anschlüsse (27A, 27B) der zweiten Sekundärbatterie (1β) ist, von der äußeren Seite in der zweiten Schnittrichtung (Y1, Y2) aufweist, wobei der Objektanschluss sich auf einer gleichen Seite wie der Objektanschluss der ersten Sekundärbatterie (1α) in Bezug auf einen Aufnahmeraum der ersten Sekundärbatterie (1α) und denjenigen der zweiten Sekundärbatterie (1β) in der zweiten Schnittrichtung (Y1, Y2) befindet, wobei der zweite Verbinderteil sich entlang der ersten Schnittrichtung (X1, X2) erstreckt;
einen ersten Brückenteil (73A), der sich von den Objektanschlüssen der ersten Sekundärbatterie (1α) und der zweiten Sekundärbatterie (1β) in der ersten Schnittrichtung (X1, X2) weg befindet und den ersten Verbinderteil (72A) und den zweiten Verbinderteil (72B) durch eine Region auf der äußeren Seite in Bezug auf den Flansch (13) der ersten Sekundärbatterie (1α) in der zweiten Schnittrichtung (Y1, Y2) überbrückt;
eine erste Setzstufe (74A), die zwischen dem ersten Verbinderteil (72A) und dem ersten Brückenteil (73A) bereitgestellt ist, derart dass der erste Brückenteil (73A) sich in der zweiten Schnittrichtung (Y1, Y2) weiter außen befindet als der erste Verbinderteil (72A); und
eine zweite Setzstufe (74B), die zwischen dem zweiten Verbinderteil (72B) und dem ersten Brückenteil (73A) bereitgestellt ist, derart dass der erste Brückenteil (73A) sich in der zweiten Schnittrichtung (Y1, Y2) weiter außen befindet als der zweite Verbinderteil (72B),
**dadurch gekennzeichnet, dass** das Verbindungselement (71) ferner umfasst:
einen zweiten Brückenteil (73B), der an einer Stelle an einer entgegengesetzten Seite der ersten Brücke (73A) und weg von den Objektanschlüssen der ersten Sekundärbatterie (1α) und der zweiten Sekundärbatterie (1β) in der ersten Schnittrichtung (Y1, Y2) bereitgestellt ist und den ersten Verbinderteil (72A) und den zweiten Verbinderteil (72B) durch die Region auf der äußeren Seite in Bezug auf den Flansch (13) der ersten Sekundärbatterie (1α) in der zweiten Schnittrichtung (Y1, Y2) überbrückt;
eine dritte Setzstufe (74C), die derart zwischen dem ersten Verbinderteil (72A) und dem zweiten Brückenteil (73B) bereitgestellt ist, dass der zweite Brückenteil (73B) sich in der zweiten Schnittrichtung (Y1, Y2) weiter außen befindet als der erste Verbinderteil (72A); und
eine vierte Setzstufe (74D), die zwischen dem zweiten Verbinderteil (72B) und dem zweiten Brückenteil (73B) bereitgestellt ist, derart dass der zweite Brückenteil (73B) sich in der zweiten Schnittrichtung (Y1, Y2) weiter außen befindet als der zweite Verbinderteil (72B).

2. Batteriepack nach Anspruch 1, wobei
der erste Verbinderteil (72A) an den Objektanschluss der ersten Sekundärbatterie (1α) geschweißt ist, und
der zweite Verbinderteil (72B) an den Objektanschluss der zweiten Sekundärbatterie (1β) geschweißt ist.

3. Batteriepack nach Anspruch 1 oder 2, wobei
die erste Setzstufe (74A) und die zweite Setzstufe (74B) sich auf einer äußeren Seite in Bezug auf die Objektanschlüsse der ersten Sekundärbatterie (1α) und der zweiten Sekundärbatterie (1β) in der ersten Schnittrichtung (X1, X2) befinden.

4. Batteriepack (70) nach einem der Ansprüche 1 bis 3, wobei
in jeder von der ersten Sekundärbatterie (1α) und der zweiten Sekundärbatterie (1β) der Flansch (13) und der zweite Behälter (6) in einem höheren Maße nach außen hervorstehen als der Anschluss (27A, 27B) in der zweiten Schnittrichtung (Y1, Y2).

5. Batteriepack (70) nach einem der Ansprüche 1 bis 4, wobei
in jeder von der ersten Sekundärbatterie (1α) und der zweiten Sekundärbatterie (1β),
das erste Behälterelement (5) ein Paar geneigte Flächen (26A, 26B) umfasst, die in Bezug auf die untere Wand (7) geneigt sind,
jede der geneigten Flächen (26A, 26B) zwischen der unteren Wand (7) und einer entsprechenden von den ersten Seitenwänden (8A, 8B) bereitgestellt ist und derart geneigt ist, dass ein stumpfer Winkel an dem Schnittteil mit der unteren Wand (7) erzeugt wird und ein stumpfer Winkel an dem Schnittteil mit der entsprechenden von den ersten Seitenwänden (8A, 8B) erzeugt wird,
jeder der Anschlüsse (27A, 27B) an einer entsprechenden von den geneigten Flächen (26A, 26B) befestigt ist.

6. Batteriepack (70) nach Anspruch 5, wobei
in jeder von der ersten Sekundärbatterie (1α) und der zweiten Sekundärbatterie (1β) jede der geneigten Flächen (26A, 26B) zwischen den zweiten Seitenwänden (9A, 9B) entlang der ersten Schnittrichtung (X1, X2) ununterbrochen ist.

7. Batteriepack (70) nach Anspruch 5 oder 6, wobei
in jeder von der ersten Sekundärbatterie (1α) und der zweiten Sekundärbatterie (1β) jeder der Anschlüsse (27A, 27B) einen Kopfteil (61) umfasst, der von einer entsprechenden der geneigten Flächen (26A, 26B) nach außen hervorsteht,
in jeder von der ersten Sekundärbatterie (1α) und der zweiten Sekundärbatterie (1β) der Kopfteil (61) von jedem der Anschlüsse (27A, 27B) umfasst:
eine erste Anschlussfläche (66) parallel zur unteren Wand (7);
eine zweite Anschlussfläche (67), die sich von der ersten Anschlussfläche (66) hin zu einer Seite erstreckt, wo der Flansch (13) sich befindet, und die parallel zu einer entsprechenden von den ersten Seitenwänden (8A, 8B) ist,
eine dritte Anschlussfläche (68), die sich zwischen der ersten Anschlussfläche (66) und der zweiten Anschlussfläche (67) erstreckt und die parallel zu einer entsprechenden von den geneigten Flächen (26A, 26B) ist,
der erste Verbinderteil (72A) in Flächenkontakt mit der zweiten Anschlussfläche (67) des Objektanschlusses der ersten Sekundärbatterie (1α) ist, und
der zweite Verbinder (72B) in Flächenkontakt mit der zweiten Anschlussfläche (67) des Objektanschlusses der zweiten Sekundärbatterie (1β) ist.

8. Batteriepack (70) nach einem der Ansprüche 1 bis 7, wobei
in jeder von der ersten Sekundärbatterie (1α) und der zweiten Sekundärbatterie (1β) eine Abmessung (L1) von jedem der Anschlüsse (27A, 27B) in der ersten Schnittrichtung (X1, X2) 27 % bis 60 % von derjenigen (L2) zwischen den zweiten Seitenwänden (9A, 9B) in der ersten Schnittrichtung (X1, X2) beträgt.

9. Batteriepack (70) nach einem der Ansprüche 1 bis 8, wobei
in jeder von der ersten Sekundärbatterie (1α) und der zweiten Sekundärbatterie (1β) eine Abmessung (L1) von jedem der Anschlüsse (27A, 27B) in der ersten Schnittrichtung (X1, X2) 23 mm bis 50 mm beträgt.

10. Batteriepack (70) nach einem der Ansprüche 1 bis 9, wobei
jede von der ersten Sekundärbatterie (1α) und der zweiten Sekundärbatterie (1β) ein Paar Isolierelemente (28A, 28B) umfasst, und
in jeder von der ersten Sekundärbatterie (1α) und der zweiten Sekundärbatterie (1β),
jedes der Isolierelemente (28A, 28B) zwischen dem ersten Behälterelement (5) und einem entsprechenden der Anschlüsse (27A, 27B) zwischengelegt ist, und
jeder der Anschlüsse (27A, 27B) auf einer inneren Seite in Bezug auf einen äußeren Rand (P1, P2; P3, P4) von einem entsprechenden der Isolierelemente (28A, 28B) in der ersten Schnittrichtung (X1, X2) angeordnet ist.

11. Batteriepack (70) nach Anspruch 10, wobei
in jeder von der ersten Sekundärbatterie (1α) und der zweiten Sekundärbatterie (1β) ein Objektisolierelement, das ein entsprechendes von den Isolierelementen (28A, 28B) ist, zwischen dem Objektanschluss und dem ersten Behälterelement (5) zwischengelegt ist, und
die erste Setzstufe (74A) und die zweite Setzstufe (74B) des Verbindungselements (71) sich auf einer inneren Seite in Bezug auf einen äußeren Rand (P1, P2; P3, P4) des Objektisolierelements der ersten Sekundärbatterie (1α) und der zweiten Sekundärbatterie (1β) in der ersten Schnittrichtung (X1, X2) befinden.

## Revendications

1. Bloc-batterie (70) comprenant :
une première batterie secondaire (1α) et une deuxième batterie secondaire (1β) empilées de manière adjacente dans une direction d'empilement (Z1, Z2), dans lequel
chacune de la première batterie secondaire (1α) et la deuxième batterie secondaire (1β) comprend un premier organe contenant (5) et un deuxième organe contenant (6) qui sont tous les deux constitués d'un métal, un groupe d'électrodes (10) incluant une électrode positive (21) et une électrode négative (22), et une paire de bornes (27A, 27B),
dans chacune de la première batterie secondaire (1α) et la deuxième batterie secondaire (1β),
le premier organe contenant (5) inclut une paroi de fond (7) ; une paire de premières parois latérales (8A, 8B) dans une première direction d'intersection (X1, X2) qui est en intersection avec la direction d'empilement (27A, 27B) ; et une paire de deuxièmes parois latérales (9A, 9B) dans une deuxième direction d'intersection (Y1, Y2) qui est en intersection avec à la fois la direction d'empilement (Z1, Z2) et la première direction d'intersection (X1, X2) ; et la paroi de fond (7), les premières parois latérales (8A, 8B) et les deuxièmes parois latérales (9A, 9B) définissent un espace de logement (11) configuré pour loger le groupe d'électrodes (10),
le premier organe contenant (5) inclut une bride faisant saillie (13) vers l'extérieur par rapport aux premières parois latérales (8A, 8B) et aux deuxièmes parois latérales (9A, 9B), la bride (13) étant prévue sur un côté à l'opposé d'un côté sur lequel la paroi de fond (7) est située dans le premier organe contenant (5),
le deuxième organe contenant (6) fait face à la bride (13), en recouvrant une ouverture (12) de l'espace de logement (11), et
chacune des bornes (27A, 27B) est fixée à une surface extérieure du premier organe contenant (5), et prévue dans une plage à l'intérieur de laquelle l'une correspondante des premières parois (8A, 8B) s'étend dans une direction circonférentielle de l'ouverture (12), et
la première batterie secondaire (1α) et la deuxième batterie secondaire (1β) sont agencées dans un état dans lequel le deuxième organe contenant (6) de la première batterie secondaire (1α) fait face à la paroi de fond de la deuxième batterie secondaire (1β),
un organe de liaison (71) qui relie électriquement la première batterie secondaire (1α) et la deuxième batterie secondaire (1β), dans lequel l'organe de liaison (71) comprend :
une première partie de liaison (72A) présentant un contact de surface avec une borne d'objet, qui est l'une des bornes (27A, 27B) de la première batterie secondaire (1α), depuis un côté extérieur dans la deuxième direction d'intersection (Y1, Y2), et s'étendant dans la première direction d'intersection (X1, X2) ;
une deuxième partie de liaison (72B) présentant un contact de surface avec une borne d'objet, qui est l'une des bornes (27A, 27B) de la deuxième batterie secondaire (1β), depuis le côté extérieur dans la deuxième direction d'intersection (Y1, Y2), la borne d'objet étant située sur un même côté que la borne d'objet de la première batterie secondaire (1α) par rapport à un espace de logement de la première batterie secondaire (1α) et à un espace de logement de la deuxième batterie secondaire (1β) dans la deuxième direction d'intersection (Y1, Y2), la deuxième partie de liaison s'étendant dans la première direction d'intersection (X1, X2) ;
une première partie de raccordement (73A) prévue éloignée des bornes d'objet de la première batterie secondaire (1α) et de la deuxième batterie secondaire (1β) dans la première direction d'intersection (X1, X2), et raccordant la première partie de liaison (72A) et la deuxième partie de liaison (72B) à travers une région sur le côté extérieur par rapport à la bride (13) de la première batterie secondaire (1α) dans la deuxième direction d'intersection (Y1, Y2) ;
une première colonne montante (74A) prévue entre la première partie de liaison (72A) et la première partie de raccordement (73A) de manière à situer la première partie de raccordement (73A) davantage vers l'extérieur dans la deuxième direction d'intersection (Y1, Y2) par rapport à la première partie de liaison (72A) ; et
une deuxième colonne montante (74B) prévue entre la deuxième partie de liaison (72B) et la première partie de raccordement (73A) de manière à situer la première partie de raccordement (73A) davantage vers l'extérieur dans la deuxième direction d'intersection (Y1, Y2) par rapport à la deuxième partie de liaison (72B),
**caractérisé en ce que** l'organe de liaison (71) comprend en outre :
une deuxième partie de raccordement (73B) prévue à un emplacement sur un côté opposé de la première partie de raccordement (73A) et éloignée des bornes d'objet de la première batterie secondaire (1α) et la deuxième batterie secondaire (1β) dans la première direction d'intersection (Y1, Y2) et raccordant la première partie de liaison (72A) et la deuxième partie de liaison (72B) à travers la région sur le côté extérieur par rapport à la bride (13) de la première batterie secondaire (1α) dans la deuxième direction d'intersection (Y1, Y2) ;
une troisième colonne montante (74C) prévue entre la première partie de liaison (72A) et la deuxième partie de raccordement (73B) de manière à situer la deuxième partie de raccordement (73B) davantage vers l'extérieur dans la deuxième direction d'intersection (Y1, Y2) par rapport à la première partie de liaison (72A) ; et
une quatrième colonne montante (74D) prévue entre la deuxième partie de liaison (72B) et la deuxième partie de raccordement (73B) de manière à situer la deuxième partie de raccordement (73B) davantage vers l'extérieur dans la deuxième direction d'intersection (Y1, Y2) par rapport à la deuxième partie de liaison (72B).

2. Bloc-batterie selon la revendication 1, dans lequel
la première partie de liaison (72A) est soudée à la borne d'objet de la première batterie secondaire (1α), et
la deuxième partie de liaison (72B) est soudée à la borne d'objet de la deuxième batterie secondaire (1β).

3. Bloc-batterie selon la revendication 1 ou 2, dans lequel
la première colonne montante (74A) et la deuxième colonne montante (74B) sont situées sur un côté extérieur par rapport aux bornes d'objet de la première batterie secondaire (1α) et de la deuxième batterie secondaire (1β) dans la première direction d'intersection (X1, X2).

4. Bloc-batterie (70) selon l'une quelconque des revendications 1 à 3, dans lequel
dans chacune de la première batterie secondaire (1α) et la deuxième batterie secondaire (1β), la bride (13) et le deuxième organe contenant (6) font saillie vers l'extérieur dans une plus grande mesure que la borne (27A, 27B) dans la deuxième direction d'intersection (Y1, Y2).

5. Bloc-batterie (70) selon l'une quelconque des revendications 1 à 4, dans lequel
dans chacune de la première batterie secondaire (1α) et la deuxième batterie secondaire (1β),
le premier organe contenant (5) inclut une paire de surfaces inclinées (26A, 26B) qui sont inclinées par rapport à la paroi de fond (7),
chacune des surfaces inclinées (26A, 26B) est prévue entre la paroi de fond (7) et l'une correspondante des premières parois latérales (8A, 8B), et est inclinée de manière à créer un angle obtus à la partie d'intersection avec la paroi de fond (7) et créer un angle obtus à la partie d'intersection avec l'une correspondante des premières parois latérales (8A, 8B), et
chacune des bornes (27A, 27B) est fixée à l'une correspondante des surfaces inclinées (26A, 26B).

6. Bloc-batterie (70) selon la revendication 5, dans lequel
dans chacune de la première batterie secondaire (1α) et la deuxième batterie secondaire (1β), chacune des surfaces inclinées (26A, 26B) est continue entre les deuxièmes parois latérales (9A, 9B) dans la première direction d'intersection (X1, X2).

7. Bloc-batterie (70) selon la revendication 5 ou 6, dans lequel
dans chacune de la première batterie secondaire (1α) et la deuxième batterie secondaire (1β), chacune des bornes (27A, 27B) inclut une partie de tête (61) faisant saillie vers l'extérieur depuis l'une correspondante des surfaces inclinées (26A, 26B),
dans chacune de la première batterie secondaire (1α) et la deuxième batterie secondaire (1β), la partie de tête (61) de chacune des bornes (27A, 27B) inclut :
une première surface de borne (66) parallèle à la paroi de fond (7) ;
une deuxième surface de borne (67) qui s'étend depuis la première surface de borne (66) vers un côté sur lequel la bride (13) est située, et qui est parallèle à l'une correspondante des premières parois latérales (8A, 8B),
une troisième surface de borne (68) qui s'étend entre la première surface de borne (66) et la deuxième surface de borne (67), et qui est parallèle à l'une correspondante des surfaces inclinées (26A, 26B),
la première partie de liaison (72A) est en contact de surface avec la deuxième surface de borne (67) de la borne d'objet de la première batterie secondaire (1α), et
la deuxième partie de liaison (72B) est en contact de surface avec la deuxième surface de borne (67) de la borne d'objet de la deuxième batterie secondaire (1β).

8. Bloc-batterie (70) selon l'une quelconque des revendications 1 à 7, dans lequel
dans chacune de la première batterie secondaire (1α) et la deuxième batterie secondaire (1β), une dimension (L1) de chacune des bornes (27A, 27B) dans la première direction d'intersection (X1, X2) est de 27 % à 60 % de celle (L2) entre les deuxièmes parois latérales (9A, 9B) dans la première direction d'intersection (X1, X2).

9. Bloc-batterie (70) selon l'une quelconque des revendications 1 à 8, dans lequel
dans chacune de la première batterie secondaire (1α) et la deuxième batterie secondaire (1β), une dimension (L1) de chacune des bornes (27A, 27B) dans la première direction d'intersection (X1, X2) et de 23 mm à 50 mm.

10. Bloc-batterie (70) selon l'une quelconque des revendications 1 à 9, dans lequel
chacune de la première batterie secondaire (1α) et la deuxième batterie secondaire (1β) inclut une paire d'organes isolants (28A, 28B), et
dans chacune de la première batterie secondaire (1α) et la deuxième batterie secondaire (1β),
chacun des organes isolants (28A, 28B) est interposé entre le premier organe contenant (5) et l'une correspondante des bornes (27A, 27B), et
chacune des bornes (27A, 27B) est agencée sur un côté intérieur par rapport à un bord extérieur (P1, P2 ; P3, P4) de l'un correspondant des organes isolants (28A, 28B) dans la première direction d'intersection (X1, X2).

11. Bloc-batterie (70) selon la revendication 10, dans lequel
dans chacune de la première batterie secondaire (1α) et la deuxième batterie secondaire (1β), un organe isolant d'objet, qui est l'un correspondant des organes isolants (28A, 28B), s'interpose entre la borne d'objet et le premier organe contenant (5), et
la première colonne montante (74A) et la deuxième colonne montante (74B) de l'organe de liaison (71) sont situées sur un côté intérieur par rapport un bord extérieur (P1, P2 ; P3, P4) de l'organe isolant d'objet de la première batterie secondaire (1α) et la deuxième batterie secondaire (1β) dans la première direction d'intersection (X1, X2).
